# EUROPEAN PATENT SPECIFICATION

(11) **EP 4 181 004 B1**
(45) Date of publication and mention of the grant of the patent: **03.04.2024**
(21) Application number: 21290074.0
(22) Date of filing: 12.11.2021
(51) Int. Cl.: G06F 21/62

(54) **ENABLING CUSTOM PRIVACY FOR EXECUTING APPLICATIONS ON DATA COOPERATIVES**
ERMÖGLICHUNG VON ANWENDERSPEZIFISCHER PRIVATSPHÄRE ZUR AUSFÜHRUNG VON ANWENDUNGEN AUF DATENGENOSSENSCHAFTEN
ACTIVATION DE CONFIDENTIALITÉ PERSONNALISÉE POUR EXÉCUTER DES APPLICATIONS DANS DES COOPÉRATIVES DE DONNÉES

(43) Date of publication of application: 17.05.2023
(73) Proprietor: Accenture Global Solutions Limited, Dublin 4 (IE)
(72) Inventor: Dey, Kuntal, 731224 Rampurhat (IN); Giordano, Giuseppe, 06600 Antibes (FR); Das, Sankar Narayan, 700122 Barrackpore (IN); Milazzo, Andrea Maria, 06/06160 Antibes-Juan Les Pins (FR); Schiatti, Luca, 06/06160 Juan les pins (FR); Kaulgud, Vikrant, 13/411052 Pune (IN)
(74) Representative: Müller-Boré & Partner Patentanwälte PartG mbB

(56) References cited:
- US-A1- 2020 234 198
- KLEOMENIS KATEVAS ET AL: "Policy-Based Federated Learning", ARXIV.ORG, CORNELL UNIVERSITY LIBRARY, 201 OLIN LIBRARY CORNELL UNIVERSITY ITHACA, NY 14853, 16 February 2021 (2021-02-16), XP081879504,
- JI LIU ET AL: "From Distributed Machine Learning to Federated Learning: A Survey", ARXIV.ORG, CORNELL UNIVERSITY LIBRARY, 201 OLIN LIBRARY CORNELL UNIVERSITY ITHACA, NY 14853, 10 May 2021 (2021-05-10), XP081956316,

## Description

### TECHNICAL FIELD

The present disclosure relates generally to computing architectures and more particularly to computing architectures for dynamically configuring processes using a data cooperative having a plurality of data sources and diverse privacy requirements per data source.

### BACKGROUND

Privacy has emerged as an important requirement in today's world, with international regulations such as GDPR and others being introduced and controlling how and when data may be shared. Given the growing number of ways that data is collected (e.g., cookies and other techniques for monitoring user web browsing, use of Internet of Things (IoT), etc.) and the emergence of new forms of connectivity, such as edge computing, the use of collected data for analytics, recommendations, etc. has become more challenging. For example, some entities (e.g., businesses, service providers, etc.) may host user data on the cloud while others may host user data in a backend, such as a server. While techniques such as edge computing and federated machine learning may be used to support and boost computational technologies that utilize such large datasets, differential privacy remains a challenge to be solved. For example, when it comes to creating a homogeneous environment wherein a decision is taken or a process can be executed that involves data from multiple data sources (e.g., different entities), data privacy requirements and compliance with regulatory requirements presents a significant challenge. For instance, suppose that Client A wants secure computation at a back end device (e.g., a server of Client A) and that it is acceptable to upload data to the back end, while Client B wants to retain data and perform computations locally, and prefers not to upload data to the back end. Presently, there is no way to arrive at a common ground so that the server can decide upon a software architecture to be created that can bring both these clients (albeit after a negotiation if not in absence of one) into a common understanding, and letting the backend thus create a common architecture with which both the clients would agree to work.
Document "Policy-based Federated Learning", Kleomenis Katevas et al, XP081879504, discloses a decentralized, edge-based framework that supports heterogeneous privacy policies for federated learning. The document discloses three use cases that train models with sensitive user data collected by mobile-phones-predictive text, image classification, and notification engagement prediction on a raspberry PI edge device.

### SUMMARY

The claimed invention is defined by the features set out in the appended independent claims. Additional embodiments of the claimed invention are defined by the dependent claims.

Aspects of the present disclosure provide systems, methods, and computer-readable storage media that support leveraging of data cooperatives to facilitate configuration of execution environments in which processes may be performed using data supplied by various data sources of the data cooperative. Each data source may configure custom privacy levels for both data storage and execution, thereby retaining individual control over the privacy requirements afforded their respective users. To facilitate processes in which data from multiple participants of the data cooperative is utilized, information regarding the data storage and execution privacy levels to be analyzed by each entity mapping data may be generated. The mapping data for each entity may specify threshold data storage and execution privacy levels for each entity of the data cooperative, and the mapping data may be transmitted by each entity to a central computing device, referred to herein as a privacy preserving management module device (PPMMD).

The PPMMD may be configured to utilize the mapping data provided by the various entities of the data cooperative to generate a unified storage-and-execution privacy policy. The unified storage-and-execution privacy policy generated by the PPMMD may meet or exceed the data storage privacy levels configured by each individual entity (e.g., data source) and their respective users. The PPMMD may then use the unified storage-and-execution policy to configure an execution environment in which cooperative data (e.g., data shared to the execution environment by each entity) may be analyzed, evaluated, or some other form of processing as a collective dataset. It is noted that the execution environment may be centralized or distributed across multiple computing devices. Data provided to the execution environment by the various entities may be analyzed within the execution environment in a manner that preserves the privacy of the data. For example, the execution environment may be configured by the PPMMD to provide a level of privacy for all data that meets or exceeds the data storage and execution privacy levels specified in the mapping data of all entities. In some aspects, configuration of the execution environment may include configuring one or more executable modules, which may be transmitted to one or more computing devices associated with the execution environment. For example, the one or more modules may include modules for performing pre-processing of data at each data source (e.g., to condition the data provided to the execution environment). The one or more modules may also include executable modules for configuring the execution environment, such as to configure the execution environment to handle processing of the provided data in an encrypted format, to evaluate the data using one or more machine learning models, and the like.

The foregoing has outlined rather broadly the features and technical advantages of the present disclosure in order that the detailed description that follows may be better understood. Additional features and advantages will be described hereinafter which form the subject of the claims of the disclosure. It should be appreciated by those skilled in the art that the conception and specific aspects disclosed may be readily utilized as a basis for modifying or designing other structures for carrying out the same purposes of the present disclosure. It should also be realized by those skilled in the art that such equivalent constructions do not depart from the scope of the disclosure as set forth in the appended claims. The novel features which are disclosed herein, both as to organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following descriptions taken in conjunction with the accompanying drawings, in which:
FIG. 1 is a block diagram of an example of a system a system for dynamically configuring processes using a data cooperative having a plurality of data sources in accordance with aspects of the present disclosure;
FIG. 2 shows a flow diagram of an exemplary method for dynamically configuring processes using a data cooperative having a plurality of data sources in accordance with aspects of the present disclosure; and
FIG. 3 is another flow diagram of an exemplary method for dynamically configuring processes using a data cooperative having a plurality of data sources in accordance with aspects of the present disclosure.

It should be understood that the drawings are not necessarily to scale and that the disclosed aspects are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular aspects illustrated herein.

### DETAILED DESCRIPTION

Aspects of the present disclosure provide systems, methods, apparatus, and computer-readable storage media that support leveraging of data cooperatives to facilitate configuration of execution environments in which processes may be performed using data supplied by various data sources of the data cooperative. The data sources of the data cooperative may correspond to different entities providing services or other types of functionality to their respective users. As part of the data collection process, each entity may configure custom privacy levels for storage and execution of processes on the data collected from their users. The customer privacy levels may be used to generate mapping data that is provided to a central computing device, referred to as a PPMMD, having the authority of the data cooperative to configure an execution environment where the user data can be processed as a collective or cooperative dataset. The PPMMD may configure a unified storage-and-execution policy based on the custom privacy levels of each participating entity, where the unified storage-and-execution policy provides privacy levels that meet or exceed the custom privacy levels of all participating entities. Using the unified storage and execution policy, the PPMMD may configure aspects of the execution environment, such as to configure one or more machine learning models, specify how data is to be formatted for use with the execution environment, and the like. Once configured, various types of processing (e.g., machine learning models, etc.) may be used to evaluate the cooperative dataset, thereby enabling insights and information to be extracted from the cooperative dataset while preserving the privacy of all data included therein in a manner consistent with the customer privacy levels of each entity.

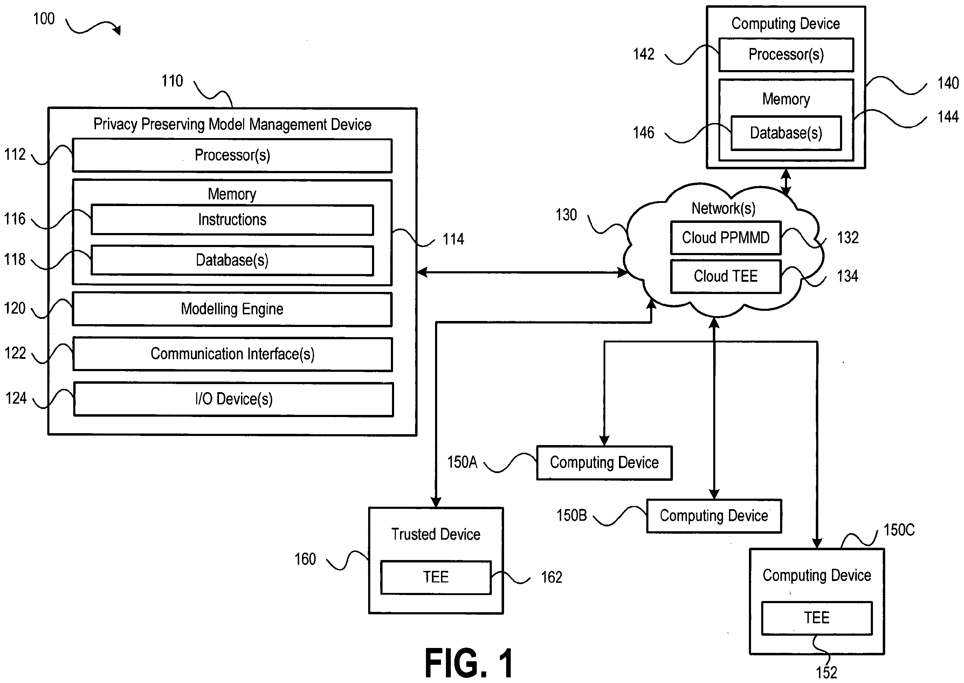

Referring to FIG. 1, an example of a system for dynamically configuring processes using a data cooperative having a plurality of data sources in accordance with aspects of the present disclosure is shown as a system 100. The system 100 may be configured to establish storage and execution policies for controlling execution of modelling processes, such as one or more machine learning models, utilizing user data and federated learning techniques. The storage and execution policies may be configured locally based on interactions between service providers and users and then information associated with the storage and execution policies may be used to create mapping data that may be provided to a privacy preserving model management device (PPMMD). The PPMMD may be configured to control execution of the machine learning processes based on the mapping data and deploy data to appropriate execution environments to control the execution of the machine learning processes in accordance with the storage and execution policy requirements. Additional details regarding the above-described operations are described in more detail below.

As shown in FIG. 1, the system 100 includes a PPMD 110. The PPMD 110 includes one or more processors 112, a memory 114, a modelling engine 120, one or more communication interfaces 122, and one or more input/output (I/O) devices 124. The one or more processors 112 may include one or more microcontrollers, application specific integrated circuits (ASICs), field programmable gate arrays (FPGAs), central processing units (CPUs) and/or graphics processing units (GPUs) having one or more processing cores, or other circuitry and logic configured to facilitate the operations of the PPMMD in accordance with aspects of the present disclosure. The memory 114 may include random access memory (RAM) devices, read only memory (ROM) devices, erasable programmable ROM (EPROM), electrically erasable programmable ROM (EEPROM), one or more hard disk drives (HDDs), one or more solid state drives (SSDs), flash memory devices, network accessible storage (NAS) devices, or other memory devices configured to store data in a persistent or non-persistent state. Software configured to facilitate operations and functionality of the PPMMD 110 may be stored in the memory 114 as instructions 116 that, when executed by the one or more processors 112, cause the one or more processors 112 to perform the operations described herein with respect to the PPMMD 110, as described in more detail below. Additionally, the memory 114 may be configured to store data and information at one or more database 118. Illustrative aspects of the data that may be stored at the one or more databases 118 are described in more detail below.

The modelling engine 120 may be configured to dynamically create and configure modelling processes for evaluating, analyzing, and leveraging user data. For example, the modelling processes may include creation and training of machine learning models based on a plurality of datasets compiled from user data collected and captured by various service providers. The machine learning models may be configured to provide diagnostic capabilities, predictive capabilities, and the like based on the user data. In some aspects, the configuration of the modelling processes may be performed on-the-fly or at runtime. For example, the modelling processes may be created and configured based on a current state of the environment where the model is to be executed just prior to execution. Such dynamic configuration ensures that the modelling process is fresh or appropriately configured for the current target environment, which may change frequently or from time-to-time, thereby ensuring that the modelling process(es) is executed based on the current state of the target environment (e.g., model parameters are configured based on current body of knowledge gleaned from prior executions, model execution environments are configured according to current data privacy requirements of the current target environment, etc.) and allowing the modelling processes to produce outputs that are more accurate with respect to predictive and/or diagnostic capabilities, as described in more detail below.

The one or more communication interfaces 122 may be configured to communicatively couple the PPMMD 110 to external devices via one or more networks 130 via wired and/or wireless communication links. In an aspect, the one or more networks 130 may include local area networks (LANs), wide area networks (WANs), metropolitan area networks (MANs), or other types of networks and network topologies enabling computing devices to communicate data over the networks 130. The wired or wireless communication links communicatively coupling the PPMMD 110 to the external devices may be established according to one or more communication protocols or standards (e.g., an Ethernet protocol, a transmission control protocol/internet protocol (TCP/IP), an Institute of Electrical and Electronics Engineers (IEEE) 802.11 protocol, an IEEE 802.16 protocol, a 3rd Generation (3G) communication standard, a 4th Generation (4G)/long term evolution (LTE) communication standard, a 5th Generation (5G) communication standard, and the like).

The one or more I/O devices 124 may include one or more display devices, a keyboard, a stylus, one or more touchscreens, a mouse, a trackpad, a microphone, a camera, one or more speakers, haptic feedback devices, or other types of devices that enable a user to receive information from and/or provide information to the PPMMD 110. In some implementations, the PPMMD 110 is coupled to the display device, such as a monitor, a display (e.g., a liquid crystal display (LCD) or the like), a touch screen, a projector, a virtual reality (VR) display, an augmented reality (AR) display, an extended reality (XR) display, or the like. In some other implementations, the display device is included in or integrated in the PPMMD 110.

It is noted that while FIG. 1 shows the PPMMD 110 implemented as one or more computing devices (e.g., one or more servers), in some aspects the functionality of the PPMMD 110 may be implemented as cloud-based functionality, such as a cloud-based PPMMD 132. In such an embodiment, computing resources (e.g., processors, memory, etc.) deployed on a cloud computing platform (e.g., Amazon Web Services (AWS), Microsoft Azure, etc.) may be configured to provide the functionality described herein in connection with the PPMMD 110. Furthermore, it is noted that in some embodiments combinations of server-based PPMMDs and cloud-based PPMMDs may be provided.

The external systems communicatively coupled to the PPMMD 110 via the one or more networks 130 may include various computing devices of third parties with respect to an entity that operates the PPMMD 110. To illustrate and as shown in FIG. 1, the PPMMD 110 may be communicatively coupled to a computing device 140 and computing devices 150A-150C. Each of the computing devices 140 and 150A-150C may be operated by an entity, such as business or service provider, that is a third party with respect to the entity that operates the PPMMD 110. As a non-limiting and illustrative example, the computing devices 140, 150A-150C may each be operated by a different hospital or chain of hospitals, and the PPMMD 110 may be utilized to perform machine learning processes in a distributed or federated manner that enables the hospitals to gain insights into patient conditions (e.g., medical conditions, symptoms of medical conditions, efficacy of treatments for the medical conditions, and the like) based on medical data while preserving the privacy of patient data utilized by the machine learning models. In this manner, more rapid understanding of medical conditions may be achieved via machine learning techniques and the accuracy and predictive capabilities of the machine learnings models may be improved through the use of data sets across multiple hospitals or hospital systems. Exemplary aspects and operations for performing training and analysis of user data (e.g., patient data, customer data, etc.) using distributed or federated machine learning techniques and the functionality of the PPMMD 110 in accordance with the present disclosure are described in more detail below.

As shown in FIG. 1, the computing device 140 may include one or more processors 142 and a memory 144. The one or more processors 142 may be the same as or similar to the one or more processors 112 and the memory 144 may include memory devices that are the same or similar to the memory devices described above with reference to the memory 114. Additionally, the memory 144 may store instructions that, when executed by the one or more processors 142, cause the one or more processors 142 to perform the operations described with reference to computing device 140 herein. Additionally, the memory 144 may include one or more databases 146. The one or more databases 146 may include data captured by the computing device 140 during the course of providing one or more services or other functionality to users. As described in more detail below, the one or more databases 146 may be utilized to compile datasets suitable for use with one or more machine learning models. It is noted that the datasets compiled from the one or more databases 146 may include all or a subset of the available data stored in the one or more databases 146.

The particular portion(s) of the available data selected (e.g., from the one or more databases 146) for inclusion in the dataset(s) used in conjunction with the machine learning models and processes of the system 100 may be controlled by one or more policies configured between an entity that operates the computing device 140 and the users. For example, when a user signs up for and/or accesses a service or other functionality associated with the entity that operates the computing device 140, the user may be asked to sign a policy governing use of data captured from the customer in conjunction with the provisioning of the service(s) or functionality. The policy may be in the form of a service agreement, a data use agreement, a privacy rights agreement, or other form of agreement that specifies permissions and restrictions with respect to the use of the user's data by the entity operating the computing device 140. For example, the policy may specify permissions that outline one or more types of data that may be shared with third parties, purposes for which the sharing is authorized, or other permissions with respect to the use of the user's data. The policy may also specify restrictions with respect to the user's data, such as one or more data types that may not be shared for any reason, that data authorized to be shared may only be shared with particular computing environments (e.g., a trusted third party computing device, a computing device having a trusted execution environment (TEE), a computing device operated by the entity providing the service to the user, etc.), or other types of restrictions. The policy may also specify rights and restrictions with respect to storage of the user's data or other types of rights, privileges, and restrictions. Additional exemplary storage strategies may include: data is never given out to any other party; data is never given out to any other party for a certain time duration and/or within a timeframe from data collection; data may be given out to other parties only when certain storage and computation strategies are agreed upon, where the agreed upon storage and computation strategies may optionally be authorized for use for a certain time duration and/or within a timeframe from data collection (e.g., use of the user's data is authorized for permitted uses within 1 week, 1 month, etc. from the time the data is collected) or not authorized for use for a certain time duration and/or within a timeframe from data collection (e.g., use of the user's data is not authorized for permitted uses until the data is older than 1 week, 1 month, etc. from the time the data is collected); data may be given out to other parties unconditionally, irrespective of storage security and execution policies; use of data for model-based analysis is permitted in an execution environment on a client device (e.g., one or more of the computing devices 140, 150A-150C of FIG. 1); use of data for model-based analysis is permitted in an execution environment on server in plain, unencrypted form; use of data for model-based analysis is permitted in an execution environment on a server only in a TEE; use of data for model-based analysis is permitted in an execution environment on a trusted server in any secure/encrypted form; and use of data for model-based analysis is permitted in an execution environment anywhere in any form unconditionally; and use of data for model-based analysis is permitted in an execution environment following secure multiparty computation techniques. Additional aspects of the types of permissions, rights, and restrictions that may be utilized by the system 100 to control operations (e.g., operations to store user data and execute machine learning models against datasets derived from the user data) for performing distributed or federated machine learning processes in accordance with the present disclosure are described below.

The computing devices 150A-150C may be configured similar to the computing device 140. For example, the computing devices 150A-150C may include processors, memory, and the like configured to support the operations of the computing devices 150A-150C. The memory of each computing device 150A-150C may be used to store user data captured from users during provisioning of services or functionality to those users. Each of the computing devices 150A-150C may be operated by the same or different entities. For example, computing device 150A may be operated by a first service provider (e.g., a first hospital, business, etc.), computing device 150B may be operated by a second service provider (e.g., a second hospital, business, etc.), computing device 150C may be operated by a third service provider (e.g., a third hospital, business, etc.), and so on. In some aspects, each of the computing devices 140, 150A-150C may be operated by a same type of entity, such as different medical service providers (e.g., hospitals, physicians, therapists, and the like). It is noted that while some of the examples disclosed herein are described with reference to medical service providers, such examples are provided for purposes of illustration, rather than by way of limitation and embodiments of the present disclosure may be utilized with data acquired from any type of service provider or entity that captures data that may be subject to privacy requirements. To illustrate, service providers and data analyzed using the machine learning techniques disclosed herein may include manufacturing processes (e.g., where the manufacturers may want to keep access to manufacturing processes secret), e-commerce services (e.g., where e-commerce service providers may want to keep user/customer data private), or other types of services and functionality.

As briefly described above, the system 100 may provide functionality for configuring machine learning models that may utilized to perform federated learning and training on user data, which may enable more training data to be acquired for purposes of training the machine learning models and allow more rapid development of accurate predictive and/or diagnostic capabilities. For example, in the medical field, machine learning models may be trained using data collected from patients of different medical service providers, thereby providing a larger training dataset for the machine learning models than would be obtainable from a single medical service provider alone. By increasing the size of the available training data using the federated or distributed learning techniques disclosed herein, such machine learning models may be trained more rapidly to produce accurate and reliable predictions or diagnosis of patient conditions. Moreover, the techniques implemented by the system 100 and the PPMMD 110 may enable such training of machine learning models to be performed in a distributed or federated manner while preserving the privacy of the underlying patient data used by the models. Once the models are trained, the models may then be deployed to the various service providers to improve the service providers ability to make predictions, diagnose patient conditions or behaviors, or other types of insights that may be derived from patient data (e.g., data stored in the one or more databases of the computing devices 140, 150A-150C).

In some aspects, the federated learning or training of the machine learning models may be performed by a trusted third party. For example, in FIG. 1, a trusted computing device 160 is shown. The trusted computing device 160 may be a computing device (e.g., a server) of an entity that is a third party with respect to the entities operating the computing devices 140, 150A-150C that is designated as trustworthy to access user data (e.g., the datasets compiled from the data stored in the one or more databases of the computing devices 140, 150A-150C). It is noted that the trusted computing device 160 may include components similar to those of the computing devices 140, 150A-150C. For example, the trusted computing device 160 may include one or more processors and a memory configured to support the operations described herein with respect to the trusted computing device 160. In some aspects, the trusted computing device 160 may also include a TEE 162. As used herein, TEEs may include secure enclaves or other secure computing environments where user data may be accessed and computed upon (e.g., using one or more machine learning models, etc.) in a secure manner. In some aspects, a TEE (e.g., the TEEs 152, 162) may operate on data (e.g., datasets compiled from the information stored in one or more of the one or more databases of the computing devices 140, 150A-150C) in an encrypted form. Furthermore, it is noted that in some aspects a TEE may be disposed in a cloud-type deployment, such as cloud TEE 134. Utilizing a cloud-based TEE may be beneficial for environments where user data (e.g., information stored in any of the one or more databases of the computing devices 140, 150A-150C) is hosted by a cloud service or infrastructure (e.g., because the data may be accessed from the cloud directly rather than transmitted over a network communication link to a third party, thereby minimizing risk that the data is intercepted or otherwise accessed by a malicious or unauthorized third party with respect to the entity that captured the data or the user(s) to which the data pertains).

Having described a general framework for the system 100, exemplary details for performing federated or distributed learning in accordance with the present disclosure will now be described. As briefly described above, the PPMMD 110 may be adapted to configure machine learning models and modelling processes that may be executed against datasets compiled from third party data sources (e.g., the one or more databases of the computing devices 140, 150A-150C). The modelling processes may be configured to maintain a particular level of privacy with respect to the data included in the datasets used for training the machine learning model(s). To that end, each service provider may capture privacy requirements data from its users. The privacy requirements may be captured during a user onboarding process, such as when a user signs up for or registers with the service provider or at the time a service is provided to the user by the service provider's system (e.g., one of the computing devices 140, 150A-150C).

The processes used by each different service provider may be different with respect to the types of data captured from the user (e.g., the databases of the computing devices 140, 150A-150C may capture different amounts and/or types of data from users for the same or similar services). As such, each different service provider may specify privacy requirements in a unique manner although there may be some overlap with respect to certain aspects of the capturing, storage, and use of user data. For example, a first service provider may capture a user's full name (e.g., first name, middle name, last name), date of birth, address, and telephone number while a second service provider may capture a user's partial name (e.g., first name, middle initial, last name, or first name and last name only), address, e-mail address, or other types of information. Such information may be subject to privacy regulations (e.g., general data protection regulation (GDPR) requirements) because the captured information may qualify as personally identifiable information (PII) data. Furthermore, some of the captured information may be subject to other types of regulatory requirements, such as medical data (e.g., health insurance portability and accountability act (HIPAA) requirements). Other types of service providers may capture other types of data (e.g., financial data, etc.) that may be subject to other types of privacy requirements. It is noted that the term privacy requirements, as used herein, includes government imposed regulations related to handling (e.g., processing, use or capturing of, storage, etc.) of users' data, as well as non-government imposed privacy requirements (e.g., requirements self-imposed by an entity, trade group, and the like).

Due to the diverse nature of data that may be captured, as well as differences with respect to the way that data is captured and stored by each service provider, the set of privacy requirements agreed to between each service provider and their users may create a potentially diverse set of client-sought privacy requirements. Furthermore, the privacy requirements of a single entity may give a user the choice to opt-in or opt-out of certain data collection, sharing, and storage options, further complicating the number of requirements that must be followed when compiling datasets for purposes of training and using machine learning models (e.g., because some users may opt-in while other users may opt-out of certain uses of their data). It is noted that in some instances, data may be collected from users by service providers using the computing devices 140, 150A-150C, such as via servers, while in other instances data may be collected from users by service providers using cloud-based platforms (e.g., cloud-based services).

In the context of the present disclosure, the term server-side may be considered to refer to both "cloud" and "backend" (or server) data collection techniques unless otherwise noted. For example, collection of information via server-side data capturing techniques may refer to processes to collect data via the PPMMD 110 (e.g., the PPMMD 110 may be the server and the computing devices 140, 150A-150C may be the clients in a client-server configuration) or the cloud-based PPMMD 132. Additionally, it is to be understood that the "data privacy requirements" may include requirements relating to the lifecycle of data captured from users, including both the storage and processing of the captured user data. For example, the data privacy requirements may include requirements with respect to a location of residence (e.g., where the captured data is physically stored, such as the one or more databases of the computing devices 140, 150A-150C or a cloud-based data storage technique or database), requirements with respect to retention of the users' data (e.g., how long can or must the users' data be stored), and the like. Similarly, the data privacy requirements related to processing the data may specify whether the processing is to be performed client-side (e.g., at the one or more computing devices 140, 150A-150C or a trusted third party device, such as the trusted computing device 160).

To facilitate operations of the PPMMD 110, client-side collection mechanisms may be utilized to compile information regarding data privacy requirements applicable to data captured by the computing devices 140, 150A-150C. The client-side collection mechanisms may be configured to analyze data agreements between the users and the service providers associated with each of the computing devices 140, 150A-150C, such as the above-described data privacy agreements (e.g., service agreements, etc.). The client-side collection mechanisms may include software (e.g., scripts, programs, etc.) executable by the processors of the computing devices 140, 150A-150C to analyze the data privacy agreements and generate information associated with permissible storage-and-execution policies for the data maintained by the client (e.g., the data stored in the one or more databases of the respective computing devices 140, 150A-150C or a cloud-based database storing user data).

In some aspects, the information associated with permissible storage-and-execution policies may be in the form of a map or mapping data that maps different data stored on the client-side to execution policies or requirements. To illustrate, during the analysis, the collection mechanisms executed or performed by the client-side may compile information stored in the one or more databases, such as information regarding agreements or other types of data that may specify privacy requirements agreed upon (or consented to) by the user and the service provider operating the computing device performing the analysis. During the analysis, restrictions and permissions with respect to user data may be identified, such as to identify types of data that may be shared for purposes of training a machine learning model or for purposes of performing diagnostics and/or predictions, whether the machine learning models may be executed against authorized user data server-side, client-side, or via a third party. The restrictions and permissions may include data privacy requirements with respect to storage of data, such as to specify a duration in which the data may be stored (e.g., the data may be stored for a number of weeks, months, years, or combinations thereof, or that the data must be stored for a number of weeks, months, years, or combinations there), a location where the data may be stored (e.g., in a cloud-based database, locally on one of the computing devices 140, 150A-150C, etc.), whether the user's data is to be stored in an encrypted or non-encrypted format, a minimum or maximum duration of time during which the user data may or may not be shared (e.g., the users' data may not be shared until a minimum duration of time has elapsed since the data was captured or the users' data may not be shared after a maximum duration of time has elapsed since the data was captured), or other types of conditions or restrictions with respect to how user data is stored within one or more devices of the system 100.

In addition to data storage requirements, the analysis may also identify execution requirements. The execution requirements may specify permissions and restrictions with respect to execution requirements that are to be satisfied when utilizing user data (e.g., the data stored in the one or more databases of the computing devices 140, 150A-150C) in connection with machine learning models configured by the PPMMD 110. For example, the execution requirements may specify whether evaluation of user data (e.g., using one or more machine learning models) is or is not to be performed in a TEE, on the client-side, on the server-side, at a trusted third party computing device (e.g., the computing device 160), a purpose of the execution (e.g., the user data may be executed against a machine learning model for training purposes, for predictive or diagnostic purposes but not training, or combinations thereof, such as allowing certain types of data to be used in connection with machine learning models but other types of data may not), and the like.

As a non-limiting and illustrative example, the above-described analysis of data privacy requirements may receive, as inputs, one or more agreements between a service provider and its users. The agreements may include service agreements, data privacy agreements, data sharing agreements, or other types of agreements that control usage of user data, including any computation/storage policies or agreements. The agreements may be a digitized form that can be easily read by the computing device on which the client-side collection mechanisms or analysis is running. In some aspects, the analysis may also receive inputs related to other types of policies or requirements, such as an agreement that specifies whether the client wants to treat storage and execution independently or jointly. Using the aforementioned inputs (and potentially other input data sources), the mapping data associated with the data privacy requirements for an entity may be calculated, as described in more detail below.

In the non-limiting example below agreements with respect to data privacy requirements for each type of data are referred to (for ease of reference) as a data record (e.g., similar to a data row in a spreadsheet), each field (sub-entity) within each given data record is referred to as a data field (e.g., like a data column in a spreadsheet), and each unit of data (e.g., similar to a data cell in a spreadsheet) is referred to data element. In some aspects, the mapping data may be a privacy score map and may be pre-defined by domain experts that associate each storage strategy with a storage privacy score (spc) and each execution strategy with an execution privacy score (epc). To illustrate, a data storage requirement that data may not be shared at any time and for any reason may be assigned a score of 1 while a data storage requirement that data may be shared at any time and for any reason may be assigned a score of 5 (e.g., 1 being the most restrictive and 5 being the least restrictive). In such a scoring system, intermediate levels may also be defined, such as assigning scores between 1 and 5 for policies that permit data storage and sharing within 1 month of data capture, sharing with a trusted third party, and the like. It is noted that multiple storage strategies could potentially map into a single storage privacy score value, as well as multiple execution strategies could potentially map into a single execution privacy score.

Pseudocode for a non-limiting example of a process to calculate a privacy score (pc) is shown below:
for each data field *d*(*i*) do:
   *d*(*i,* spc) = find the highest storage privacy score value by mapping the data field storage strategy value into its corresponding entry in the privacy score map and computing the maximum value among these scores;
   *d*(*i,* epc) = find the highest execution privacy score value by mapping the data field execution strategy value into its corresponding entry in the privacy score map and computing the maximum value among these scores;
   *d*(*i, pc*) = *f*(*α***d*(*i*, spc) + β**d*(*i*, epc)) is computed, where α and β are weightage factors and *f* is an arbitrarily chosen function;
for all i in the range of the data
   locate the data elements (the *row, column* index of) j1, j2, and j3 where the maximum values of *d(i,* spc), *d(i,* epc) and *d(i,* pc) are seen respectively, across all the data records and data fields;
if the business policy provided is independent then:
   return the storage strategy of *j*1 and the execution strategy of *j*2 as storage and execution policies of the client, respectively;
otherwise, if the business policy provided is *joint* then
   return both the storage and execution policies of *j*3 and send to server.

Using the above-described pseudocode, where * indicates multiplication, the storage and execution privacy scores may be determined from among all users of an entity (e.g., all users associated with services or functionality associated with one of the computing devices 140, 150A-150C) and used to generate the above-described mapping data. As shown in the exemplary pseudocode above, where the storage and execution privacy scores are considered independently, the highest spc and epc scores (e.g., *j*1 and *j*2) may be used as the mapping data (i.e., separate scores may be included in the mapping data for storage policy requirements and execution policy requirements). Where the storage and execution privacy scores are considered jointly, a single score (e.g., *j*3) may be used for the mapping data (i.e., a single scores may be included in the mapping data representing both the storage policy requirements and execution policy requirements). Configuring the mapping data as described above ensures that user data associated with the entity is handled in compliance with privacy requirements satisfying all levels of data privacy requirements among all users of the entity (e.g., because the highest levels of data privacy requirements for both storage and execution are selected).

It is noted that while the above-described pseudocode refers to the highest scores, the use of the term "highest" is provided for purposes of illustration, rather than by way of limitation and that other techniques may be used to determine the scores and mapping data. To illustrate, in the example above the "highest" score may be the most restrictive in terms of data privacy requirements for storage and/or execution, but the system 100 could just as easily be configured to deem the "lowest" score as the most restrictive in terms of data privacy requirements for storage and/or execution. Accordingly, it is to be understood that the above-described techniques may use any suitable criteria or terminology (e.g., keywords, phrases, etc.) to select or extract the particular characteristics or portions of the data storage and execution policies upon which the mapping data is based. Furthermore, it should be understood that software (e.g., scripts, programs, etc.) implementing the above-described pseudocode may leverage various techniques to extract characteristics or information from the agreements or policies during the analysis, such as optical character recognition (OCR), natural language processing techniques, dictionaries (e.g., of keywords or phrases corresponding to relevant information may be found with parsing the data, etc.), or other techniques. Moreover, in some aspects relevant information for creating the mapping data may be stored as or within metadata associated with the analyzed agreements, rather than actually evaluating the contents of the agreements or in addition to analyzing the contents of the agreements.

In some aspects, flags or other techniques may be used to minimize the amount of time required to perform analysis. For example, mapping data may be generated based on previously analyzed agreements or policies and some of those policies or agreements may not change in between executions of modelling processes while other policies or agreements may change. When a policy or agreement is changed, such as may occur when changes to privacy regulations or other factors change, a flag may be set to indicate that new or updated copies of the policies or agreements are changed, which may impact the mapping data. During generation of mapping data, the policies or agreements having flags indicating changes that have occurred may require analysis, but ones that have not been changed may not need to be analyzed. Once the new policies or agreements are analyzed, the client-side computing device may determine whether the mapping data should be altered or not. In this manner, computing resources are not wasted analyzing agreements for which data privacy requirements were previously analyzed and used to generate mapping data. Furthermore, it is noted that over time the different agreements may change at different times, such as when a patient visits a doctor's office, and as such the set of policies or agreements that need to be analyzed may also change. Utilizing the flags or other indicators may enable those policies or agreements to be identified and analyzed more quickly, resulting in more rapid generation of the mapping data as compared to analyzing all policies and agreements each time mapping data is generated.

Based on the analysis of the data privacy requirements between the service provider (e.g., an entity operating the client-side computing device, such as one of the computing devices 140, 150A-150C, or a cloud-based computing device) and its users, the privacy requirements may be converted to mapping data (e.g., scores such as the above-describe spc and epc, or pc depending on whether execution and storage policy requirements are independent or joint), and the mapping data may be provided to the PPMMD 110. It is noted that the mapping data may encode the data privacy requirements as a sequence of letters, numbers, alpha-numeric sequences, or other techniques. To illustrate, an entity may offer users varying levels of data privacy with respect to storage and execution policies and each level may be associated with a different coding (e.g., levels A-E, 1-5, A1-A5, with A/1/A1 being the least (or most) restrictive and E/5/E5 being the most (or least) restrictive).

Once the mapping data is received at the server-side, the PPMMD 110 may evaluate the mapping data and generate a storage-and-execution plan for configuring machine learning models and processes that respects the privacy requirements of all clients. For example, suppose the PPMMD 110 receives mapping data from the computing devices 140 and 150A. In such a scenario, the PPMMD 110 may evaluate the mapping data and configure a storage-and-execution plan for using one or more machine learning models and processes to process (e.g., analyze, evaluate, etc.) user data captured by the computing devices 140 and 150A in a manner that complies with the privacy requirements specified in the mapping data received from those computing devices (e.g., the storage-and-execution plan complies with the privacy requirements specified in the mapping data received from both the computing device 140 and the computing device 150A).

The mapping data, once received, may be provided to the modelling engine 120 of the PPMMD 110. The modelling engine 120 may be configured to use the mapping data (e.g., information representative of the storage-execution policies derived at each of the clients, as described above) as inputs to a process configured to generate a unified storage-and-execution policy that satisfies a threshold level of data privacy requirements for each of the clients. In some aspects, the threshold level of data privacy requirements may satisfy a minimum privacy requirement(s). In additional or alternative aspects, the threshold level of data privacy requirements may specify levels of privacy with respect to storage and execution of models on users' data associated with the client computing devices that are higher than the minimum level of privacy. The unified storage-and-execution policy may be configured to control configuration of machine learning models and execution environments across the client-side computing devices, cloud-based environments, and/or trusted third party devices where modelling processes accessing user data captured by the client-side computing devices are to be executed in a manner that is consistent with client-user data privacy requirements. Exemplary aspects of generating the unified storage-and-execution policy and utilizing the unified storage-and-execution policy to analyze captured user data in a distributed and federated manner are described in more detail below.

In some aspects, the modelling engine 120 may include a data storage and execution policy planner module (not shown in FIG. 1) configured to provide functionality for generating unified storage-and-execution policy. The functionality provided by the data storage and execution policy planner module may be embodied as software (e.g., scripts, programs, etc.) executed by the one or more processors 112, which may be stored as the instructions 116. Pseudocode for a non-limiting example of the operations and functionality provided by the data storage and execution policy planner module is provided below:
set final storage policy = the storage strategy field of (max (all storage privacy score values in the privacy score map))
set final execution policy = the execution strategy field of (max (all execution privacy score values in the privacy score map))
for each client-input do
   if (storage privacy score value corresponding to the client-input's storage strategy in privacy score map > final storage policy value) then set final storage policy = storage privacy score value corresponding to the client-input's storage strategy in privacy score map
   if (execution privacy score value corresponding to the client-input's execution strategy in privacy score map > final execution policy value) then set final execution policy = execution privacy score value corresponding to the client-input's execution strategy in privacy score map return final storage policy, final execution policy.

The set final storage policy function and the set final execution policy function may configure the final storage and execution policies that are included in the unified storage-and-execution policy, which is to be used to control how user data captured by the client-side computing devices is used in conjunction with one or more models for purpose training the models, performing predictive or diagnostic analysis, or other purposes. As shown above, the mapping data for each client is analyzed to identify a particular client's mapping data specifies a higher level of privacy than a current value of the final storage policy value and/or the final execution policy value, then the final storage policy value and/or final execution policy value may be set to the higher value(s) specified in the client's mapping data. Executing this process for the mapping data received from all clients will result in the final storage policy value and the final execution policy value being set to the highest level of data privacy requirements specified by any of the client-side computing devices (e.g., in the mapping data). This ensures that the final storage and execution policy values are configured to provide a highest level of data privacy requirements specified by any one of the client-side computing devices, thereby enabling the models to be configured and executed in a manner that preserves the privacy of all end-users (e.g., users of the services and functionality provided by the computing devices 140, 150A-150C) and any data corresponding to those end-users across all clients.

### EXAMPLE

The example described below considers operations of the system 100 in accordance with the above described functionality based on a defined set of storage and execution strategies. In the example, three hospitals, referred to as Hospital A, Hospital B, and Hospital C, are considered. In an exemplary aspect, Hospital A may correspond to computing device 150A, Hospital B may correspond to computing device 150B, and Hospital C may correspond to computing device 150C. As described above, computing devices of each hospital may provide functionality to configure data privacy requirements (e.g., storage and execution policies) to its users, referred to as users A-1 and A-2 for Hospital A, users B-1 and B-2 for Hospital B, and users C-1 and C-2 for Hospital C. The storage strategies offered by the hospitals may include storage strategies selected from the following: In this example, storage strategies may be represented in the mapping as tuples, which may take the following values based on the specified policies: (1) Data may be given out to other parties unconditionally; (2) Data may be given out to other parties only when secure computation is guaranteed and only for at most a day within a month from collection; (3) Data is never given out to any other party for more than 1 hour within a month of collection; (4) Data is given out to other parties only when the other party has a TEE; (5) Data is given out to other parties only when secure computation is guaranteed and only for at most half-a-day within a month from collection; and (6) Data is never given out to any other party. The execution strategies (β) offered by the Hospitals may include storage strategies selected from the following: (1) execution may be performed anywhere in any form unconditionally; (2) execution may be performed on a (third party) server in plain, unencrypted form; (3) execution may be performed only on a server having a TEE; (4) execution may be performed only on a trusted server in any secure/encrypted form; (5) execution may be performed only on client-side computing devices. It is noted that the exemplary storage and execution strategies described above have been provided for purposes of illustration, rather than by way of limitation and that other storage and execution strategies may be additionally or alternatively incorporated into systems operating in accordance with aspects of the present disclosure.

In this example, each of the three hospital clients (e.g., Hospitals A, B, and C) admit cardiac patients and work with a server (e.g., the computing devices 150A-150C, respectively). However, it is noted that zero or more of the hospitals may utilize a cloud-based system if desired, rather than a server. As part of serving the cardiac patients, the hospitals may capture data from the patients. The captured data may include behavioral data (e.g., walking habits, eating habits, physical movement patterns, etc.), blood element parameters, heart imaging reports, or other types of data (e.g., height, weight, and the like). A brief description of the data storage and execution policies between each hospital and the patients with respect to the above-described data is provided below.

Hospital A has declared in its policy to user A-1 that the behavioral data of A-1 such as walking habits, eating habits and physical movement patterns, will be given out to trusted third-parties only when secure computation is guaranteed, only for at most a day within a month from collection, and only allow secure computation, while all other data can be shared with other parties for legitimate purposes. Hospital A has declared in its policy to user A-2 that the behavioral data of A-2 such as walking habits, eating habits and physical movement patterns, will never be given out to any other party for more than 1 hour, within 1 month of its collection, and will never be given out afterwards to anyone else, while all other data can be shared with other parties for legitimate purposes.

Hospital B has declared in its policy to user B-1 that the behavioral data of B-1 such as walking habits, eating habits and physical movement patterns, will be given out to trusted third-parties only when secure computation is guaranteed, only for at most a day within a month from collection, and only allow secure computation, while all other data can be shared for training, learning, intelligence gathering, pattern analysis and other activities with other parties. Hospital B has declared in its policy to user B-2 that the behavioral data of B-2 such as walking habits, eating habits and physical movement patterns, will be given out to trusted third-parties only when secure computation is guaranteed, and only for at most a half-a-day within a month from collection, and only computation in TEE in the backend, while all other data can be shared with other parties for legitimate purposes.

Hospital C has declared in its policy to its user C-1 that the biological data of C-1 such as blood element parameters and heart imaging reports will be shared with trusted third parties only when there is Trusted Execution Environment (TEE) at the backend, and not otherwise, and only allow TEE-based execution, while all other data can be shared with other parties for legitimate purposes. Hospital C has declared in its policy to user C-2 that the biological data of C-2 such as blood element parameters will be shared with trusted third parties only when there is a TEE at the backend, and not otherwise, and only allow TEE-based execution, the same policy for heart imaging reports, and all other data can be shared with other parties for legitimate purposes.

In the example above, each of Hospitals A, B, and C have configured storage and execution policies to be treated independently, but as described above, aspects of the present disclosure may enable client-side entities to configure storage and execution policies that are treated jointly. As described above, the policies may be analyzed by each hospital's respective computing device (e.g., Hospital A's policies for users A-1 and A-2 may be analyzed by computing device 150A, Hospital B's policies for users B-1 and B-2 may be analyzed by computing device 150B, and Hospital C's policies for users C-1 and C-2 may be analyzed by computing device 150C) and as a result of the analysis, mapping data may be generated for each of the hospitals. Exemplary aspects of the analysis of the above-described policies and the mapping data generated as a result of the analysis is provided below. It is noted that in the privacy score map entries discussed below values are configured such that a larger number represents a higher privacy value. However, it is to be understood that such an example is provided for purposes of illustration, rather than by way of limitation and that other types of mapping data representations could be utilized (e.g., lower number represents higher privacy score, etc.).

Using the above-described storage and execution strategies (e.g., storage strategies 1-6 and execution strategies 1-5, the following initial storage and execution strategy privacy map policy values may be determined for user A-1 of Hospital A:
Privacy map value (Storage Strategy (Hospital A [A-1] [Behavioral]), Execution Strategy (Hospital A [A-1][Behavioral])) → 2, 4
Privacy map value (Storage Strategy (Hospital A [A-1][Blood]), Execution Strategy (Hospital A [A-1][Blood])) 4 1, 1
Privacy map value (Storage Strategy (Hospital A [A-1][Heart]), Execution Strategy (Hospital A [A-1][Heart])) 4 1, 1
Privacy map value (Storage Strategy (Hospital A [A-1] [Others]), Execution Strategy (Hospital A [A-1][Others])) → 1, 1.

Using the above-described storage and execution strategies (e.g., storage strategies 1-6 and execution strategies 1-5, the following initial storage and execution strategy privacy map policy values may be determined for user A-2 of Hospital A:
Privacy map value (Storage Strategy (Hospital A [A-2] [Behavioral]), Execution Strategy (Hospital A [A-2][Behavioral])) → 3, 1
Privacy map value (Storage Strategy (Hospital A [A-2][Blood]), Execution Strategy (Hospital A [A-2][Blood])) → 1, 1
Privacy map value (Storage Strategy (Hospital A [A-2][Heart]), Execution Strategy (Hospital A [A-2][Heart])) → 1, 1
Privacy map value (Storage Strategy (Hospital A [A-2] [Others]), Execution Strategy (Hospital A [A-2][Others])) → 1, 1.

Using the above-described storage and execution strategies (e.g., storage strategies 1-6 and execution strategies 1-5, the following initial storage and execution strategy privacy map policy values may be determined for user B-1 of Hospital B:
Privacy map value (Storage Strategy (Hospital B [B-1] [Behavioral]), Execution Strategy (Hospital B [B-1][Behavioral])) → 2, 4
Privacy map value (Storage Strategy (Hospital B [B-1][Blood]), Execution Strategy (Hospital B [B-1][Blood])) 4 1, 1
Privacy map value (Storage Strategy (Hospital B [B-1][Heart]), Execution Strategy (Hospital B [B-1][Heart])) 4 1, 1
Privacy map value (Storage Strategy (Hospital B [B-1][Others]), Execution Strategy (Hospital B [B-1][Others])) 4 1, 1.

Using the above-described storage and execution strategies (e.g., storage strategies 1-6 and execution strategies 1-5, the following initial storage and execution strategy privacy map policy values may be determined for user B-2 of Hospital B:
Privacy map value (Storage Strategy (Hospital B [B-2][Behavioral]), Execution Strategy (Hospital B [B-2][Behavioral])) → 5, 3
Privacy map value (Storage Strategy (Hospital B [B-2][Blood]), Execution Strategy (Hospital B [B-2][Blood])) → 1, 1
Privacy map value (Storage Strategy (Hospital B [B-2][Heart]), Execution Strategy (Hospital B [B-2][Heart])) 4 1, 1
Privacy map value (Storage Strategy (Hospital B [B-2][Others]), Execution Strategy (Hospital B [B-2][Others])) → 1, 1.

Using the above-described storage and execution strategies (e.g., storage strategies 1-6 and execution strategies 1-5, the following initial storage and execution strategy privacy map policy values may be determined for user C-1 of Hospital C:
Privacy map value (Storage Strategy (Hospital C [C-1] [Behavioral]), Execution Strategy (Hospital C [C-1][Behavioral])) → 1, 1
Privacy map value (Storage Strategy (Hospital C [C-1][Blood]), Execution Strategy (Hospital C [C-1][Blood])) → 4, 3
Privacy map value (Storage Strategy (Hospital C [C-1][Heart]), Execution Strategy (Hospital C [C-1][Heart])) → 4, 3
Privacy map value (Storage Strategy (Hospital C [C-1][Others]), Execution Strategy (Hospital C [C-1][Others])) → 1, 1.

Using the above-described storage and execution strategies (e.g., storage strategies 1-6 and execution strategies 1-5, the following initial storage and execution strategy privacy map policy values may be determined for user C-2 of Hospital C:
Privacy map value (Storage Strategy (Hospital C [C-2][Behavioral]), Execution Strategy (Hospital C [C-2][Behavioral])) → 1, 1
Privacy map value (Storage Strategy (Hospital C [C-2][Blood]), Execution Strategy (Hospital C [C-2][Blood])) → 4, 3
Privacy map value (Storage Strategy (Hospital C [C-2][Heart]), Execution Strategy (Hospital C [C-2][Heart])) → 4, 3
Privacy map value (Storage Strategy (Hospital C [C-2][Others]), Execution Strategy (Hospital C [C-2][Others])) → 1, 1.

As shown above, the analysis performed at each client-side computing device may produce information associated data privacy requirements for each user on a per-user and per-data type basis. The information may include a storage and execution tuple (e.g., <storage policy or privacy level, execution policy or privacy level> for each user and type of data provided in the agreements that were analyzed). For example, the policies between Hospitals A, B, and C and each of their respective users (e.g., users A-1 and A-2 for Hospital A, users B-1 and B-2 for Hospital B, and users C-1 and C-2 for Hospital C) may provide <storage, execution> tuples for each data type addressed by the policies. In this example, the different data types may include behavioral data, blood data (e.g., blood parameters), heart data (e.g., heart imaging records), and other data. It is noted that the data type "other data" may be different for each hospital. To illustrate, the agreement(s) between Hospital A and users A-1 and A-2 do not specify provisions for blood parameters or heart data while the agreements between Hospital C and users C-1 and C-2 include provisions for those types of data. Thus, storage and execution policy tuples for "blood data" would be governed under the provisions for "other data" for users A-1 and A-2 but would be governed by the specific provisions for "blood data" for users C-1 and C-2. Since the storage and execution policies in this example are treated independently by each of Hospitals A, B, and C, the analysis of the respective policies would yield the following:

### Hospital A

Max (Privacy map value (Storage strategy (Hospital A [Behavioral]), Execution strategy (Hospital A [Behavioral]))) → 3, 4
Max (Privacy map value (Storage strategy (Hospital A [Blood]), Execution strategy (Hospital A [Blood]))) → 1, 1
Max (Privacy map value (Storage strategy (Hospital A [Heart]), Execution strategy (Hospital A [Heart]))) → 1, 1
Max (Privacy map value (Storage strategy (Hospital A [Others]), Execution strategy (Hospital A [Others]))) → 1, 1.

### Hospital B

Max (Privacy map value (Storage strategy (Hospital B [Behavioral]), Execution strategy (Hospital B [Behavioral]))) → 5, 4
Max (Privacy map value (Storage strategy (Hospital B [Blood]), Execution strategy (Hospital B [Blood]))) → 1, 1
Max (Privacy map value (Storage strategy (Hospital B [Heart]), Execution strategy (Hospital B [Heart]))) → 1, 1
Max (Privacy map value (Storage strategy (Hospital B [Others]), Execution strategy (Hospital B [Others]))) → 1, 1.

### Hospital C

Max (Privacy map value (Storage strategy (Hospital C [Behavioral]), Execution strategy (Hospital C [Behavioral]))) → 1, 1
Max (Privacy map value (Storage strategy (Hospital C [Blood]), Execution strategy (Hospital C [Blood]))) → 4, 3
Max (Privacy map value (Storage strategy (Hospital C [Heart]), Execution strategy (Hospital C [Heart]))) → 4, 3
Max (Privacy map value (Storage strategy (Hospital C [Others]), Execution strategy (Hospital C [Others]))) → 1, 1.

Using the mappings shown above, final values determined for the storage and execution policies in this example may be generated as follows, at each client-side computing device, respectively:
Storage strategy (Hospital A), Execution strategy (Hospital A)→ 3, 4
Storage strategy (Hospital B), Execution strategy (Hospital B) → 5, 4
Storage strategy (Hospital C), Execution strategy (Hospital C) 4 4, 3.

Thus, mapping data generated by Hospital A may include a storage policy associated with the privacy level corresponding to level (3) above and an execution policy associated with level (4) above. Similarly, mapping data generated by Hospitals B and C may include a storage policy associated with the privacy level corresponding to levels (5) and (4), respectively, and an execution policy associated with levels (4) and (3), respectively. Once generated, the mapping data may be transmitted to the PPMMD 110 where final storage and execution policies may be defined (e.g., the above-described unified storage-and-execution policy). As described above, the individual storage and execution strategies (or policies) determined by each of the clients may be evaluated by the modelling engine 120 (e.g., via a data storage and execution policy planner module). Using the mapping data from above, the final storage and execution policies may be determined by the PPMMD 110 by initializing any one of the values, say the tuple <3, 4> derived from Hospital A, as the initial final storage and execution policy, and iterating over the other values derived from the mapping data provided by Hospitals B and C (e.g., the tuples <5, 4> and <4, 3>).

During the first iteration the initial final storage policy value of 3, which was initialized based on Hospital A's mapping data may be compared to the storage policy value of 5 from Hospital B's mapping data and it may be determined that Hospital B requires a higher level of privacy for storage. As such, the final storage policy may be configured to 5. Similarly, the initial final execution policy value of 4, which was initialized based on Hospital A's mapping data may be compared to the execution policy value of 4 from Hospital B's mapping data and it may be determined that Hospital B requires a same level of privacy for execution. As such, the final execution policy may remain at 4. Thus, after the first iteration, the final storage and execution policy tuple may be <5, 4>, which guarantees that the storage and execution of models against user data of Hospitals A and B will satisfy all privacy requirements for both hospitals and their respective users.

During the second iteration, the final storage policy value of 5, which was set based on Hospital B's mapping data during the first iteration, may be compared to the storage policy value of 4 from Hospital C's mapping data and it may be determined that Hospital C requires a lower level of privacy for storage. As such, the final storage policy may be unchanged and remain set at 5 (e.g., to maintain the level of privacy required by Hospital B). Similarly, the final execution policy value of 4, which was initialized based on Hospital A's mapping data and unchanged during the first iteration, may be compared to the execution policy value of 3 from Hospital C's mapping data and it may be determined that Hospital C requires a lower level of privacy for execution. As such, the final execution policy may remain at 4. Thus, after the second iteration, the final storage and execution policy tuple may be <5, 4>, which guarantees that the storage and execution of models against user data of Hospitals A and B will satisfy all privacy requirements for both hospitals and their respective users. It is noted that while this example includes 3 hospitals, such description has been provided for purposes of illustration, rather than by way of limitation and that more than 3 or less than 3 client-side entities may be present depending on the particular use case to which a system configured in accordance with the present disclosure is applied. Regardless of the number of entities involved, the above-described algorithms result in generation of a unified storage-and-execution policy that satisfies all privacy requirements with respect to both storage of users' data and execution of processes based on the user data for all involved entities.

As can be seen from the list of storage and execution policies above, the tuple <5, 4> results in a unified storage-and-execution policy in which data is given out to other parties only when secure computation is guaranteed and only for at most half-a-day within a month from collection and that execution may be performed only on a trusted server in any secure/encrypted form. Based on the unified storage-and-execution policy determined by the modelling engine 120, processes may be implemented to trigger storage of appropriate data (e.g., all or a portion of the user data as permitted by the final storage policy) and execution of processes based on the stored data (e.g., in accordance with the final execution policy). For example and with reference to FIG. 1, the PPMMD 110 may instruct computing devices 150A-150C to transmit or provide user data associated with users A-1, A-2, B-1, B-2, C-1, C-2 to trusted computing device 160 for storage. Per the unified storage-and-execution policy, the data transmitted to the trusted computing device 160 must have been collected within the past month and the trusted computing device 160 may only store the data provided by computing devices 150A-150C for at most half a day. In some aspects, the instructions provided to the computing devices 150A-150C may include information for providing the data to the trusted device 160. For example, the instructions may include encryption keys (e.g., for encrypting the user data prior to transmitting the data to the trusted computing device 160), tokens or other credentials that may be utilized by each of the computing devices 150A-150C to access and provide the data to the trusted computing device 160, or other types of information that enables the data to be provided to the trusted computing device 160 in an appropriate format and in a timely manner.

In addition to instructing the computing devices 150A-150C to provide data to the trusted computing device 160, the modelling engine 120 may also configured one or more machine learning models or other processes used during the execution phase. For example, the modelling engine 120 may configure hyper parameters of a machine learning model and provide the hyper parameters to (and potentially model itself, if not already present at) the trusted computing device 160. In some aspects, the modelling engine 120 may configured the entire execution environment on the target computing device, which may be one of the computing devices 140, 150A-150C, the trusted computing device 160, a cloud-based computing environment, or other types of computing devices. Configuring the execution environment may include configuring the level and/or type of encryption to be used (if any) for storage of user data, the number and types of models or processes to be executed against the user data, configuration of parameters for the TEE (e.g., parameters for configuring a secure enclave or other types of secure processing environment), software (e.g., one or more scripts or programs) for cleaning a data storage (e.g., memory) upon completion of the use of the machine learning models and/or processes (e.g., to remove the user data from the execution environment and target computing device), parameters controlling whether the user data may be stored in transient storage (e.g., RAM) or non-transient storage (e.g., HDDs, SSDs, etc.), expected outputs of the model(s) and/or process(es), destination targets for the outputs, and the like, or other types of parameters. In some aspects, rather than instructing the computing devices of the hospitals to transmit the user data, the PPMMD 110 may first communicate with the trusted computing device 160 (or other target computing devices where execution environments and operations are implemented) to verify whether the relevant user data is already present or needs to be transmitted, and only instructs the computing devices to transmit the user data when not already present.

It is further noted that while in the example above, the execution environment configured by the PPMMD 110 involves utilizing a trusted computing device, in some aspects, multiple computing devices may be utilized. For example, where the final data storage privacy level of the unified storage-and-execution policy requires that data be stored locally at each participating computing device, the PPMMD 110 may configure executable modules (e.g., software, such as scripts, programs, etc.) that may be provided to each of the computing devices 150A-150C to analyze the user data of Hospitals A, B, and C, respectively. Moreover, where one or more of the computing devices already include instances of the executable modules, the PPMMD 110 may provide an executable module to verify that the instance(s) of the executable module(s) is up-to-date, as well as to update the module(s) if not. Other types of executable modules that may be provided to one or more computing devices where cooperative datasets (e.g., datasets formed using data from multiple data sources, such as Hospitals A, B, and C in the example above), may include: modules to encrypt data prior to use in the execution environment, modules to condition the data prior to use of the data by the execution environment, modules configured to execute one or more processes for configuring the one or more machine learning models, configuring the execution environment (e.g., to perform processing on encrypted data, decrypt the data, set up a TEE if a TEE is not present, etc.), controlling evaluation of the cooperative dataset by the one or more machine learning models, validating the cooperative dataset is stored and/or removed by the execution environment, or other types of operations.

In some aspects, the PPMMD 110 may transmit a report corresponding to the unified storage-and-execution strategy/policy to the client-side computing devices. The report may include information regarding the storage location (e.g., where data being evaluated or analyzed will be stored, whether the data will be encrypted, etc.) and execution location (e.g., whether the execution is performed client-side, at a third party trusted computing device, a cloud-based system, and the like). The report may be transmitted prior to execution of the unified storage-and-execution strategy/policy. Additionally or alternatively, the report may be transmitted post-execution or portions may be transmitted pre- and post-execution (e.g., transmitting storage and execution location information pre-execution and result-related data associated with the execution to the computing devices post-execution). In some aspects, the report may be accompanied by information derived from the execution of the unified storage-and-execution strategy/policy, such as outcomes (e.g., whether the execution succeeded or errors occurred), information for configuring instances of one or more models trained during the execution (e.g., hyper parameters, etc.), other types of information, or combinations thereof. To illustrate and as briefly described above, the execution of the unified storage-and-execution policy may be utilized to perform federated learning for a machine learning model. During the federated learning information from many different sources, such as the hospitals in the example above, to be utilized for a common purpose, such as training a machine learning model or models while respecting the data privacy requirements of the different data sources.

Once the training is complete, information derived from the training may be used to tune hyper parameters or other aspects of the machine learning model(s) to improve the accuracy of the model(s). In the example above, the machine learning models may be utilized to perform diagnostic or predictive analysis of user data (e.g., the above-described patient data), such as to diagnose a patient condition, predict progression of medical conditions, effectiveness of treatments, other diagnostic or predictive tasks, or combinations thereof. By using the above-described techniques, a larger dataset may be realized for purposes of training machine learning models while preserving the privacy of the training datasets based on the highest levels of privacy required among all contributing data sources. This may improve the model's ability to be utilized in a non-federated manner, such as allowing hospitals (or any other type of entity) to utilize machine learning models to evaluate patients with more accuracy as compared to models trained solely based on patient data from a single hospital alone (e.g., due to the larger training dataset size).

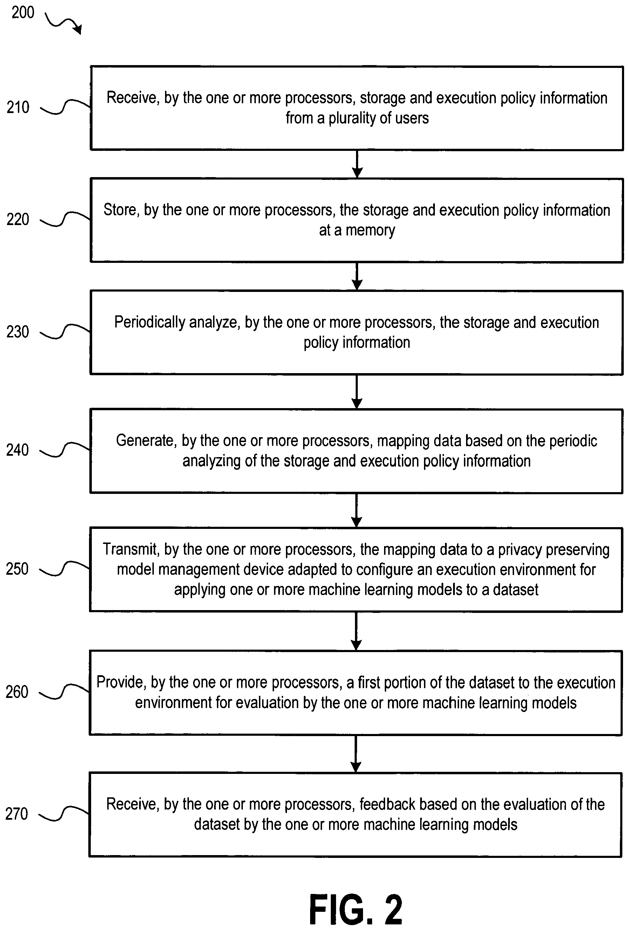

Referring to FIG. 2, a flow diagram of an exemplary method for dynamically configuring processes using a data cooperative having a plurality of data sources in accordance with aspects of the present disclosure is shown as a method 200. In an aspect, steps of the method 200 may be stored as instructions (e.g., instructions stored at a memory of the computing devices 140, 150A-150C of FIG. 1) that, when executed by one or more processors (e.g., the one or more processors of the computing devices 140, 150A-150C of FIG. 1), cause the one or more processors to perform operations for dynamically configuring processes using a data cooperative having a plurality of data sources. For example, the plurality of data sources may include the computing devices 150A-150C of FIG. 1, which may form a data cooperative for providing a cooperative dataset (e.g., a dataset formed from datasets provided by each data source, such as the data provided by Hospitals A, B, and C in the example of FIG. 1) for analysis by an execution environment, where the execution environment is configured to satisfy data storage and execution privacy requirements or levels specified by each data source, as described in the example above with reference to FIG. 1.

At step 210, the method 200 includes receiving, by one or more processors, storage and execution policy information from a plurality of users. As described above with reference to FIG. 1, the storage and execution policy information may include criteria for storing and evaluating user data in an execution environment. As described above, the execution environment may be a TEE, a distributed execution environment including a portion associated with the one or more processors (e.g., each data source contributing data to the cooperative dataset may include a computing device upon which an execution environment is instantiated to form a distributed execution environment, such as at each of the computing devices 150A-150C of FIG. 1), a cloud-based execution environment, or combinations thereof (e.g., TEEs can be present at computing devices or cloud-based execution environments). As explained with reference to FIG. 1, the storage and execution policy information received from the plurality of users may include agreements or other types of information that specifies criteria for how each user has authorized his/her data to be used by the capturing device in connection with evaluation of the user data by an execution environment. As in the example described with reference to FIG. 1, it is noted that different data sources (e.g., different ones of the computing devices 140, 150A-150C) may have different types of storage and execution policies requiring different levels of data storage privacy and execution privacy.

At step 220, the method 200 includes storing, by the one or more processors, the storage and execution policy information at a memory. In an aspect, the storage and execution policy information may be stored at one or more databases maintained at a memory accessible to the one or more processors, such as a database of the one or more computing devices 140, 150A-150C of FIG. 1 or a cloud-based environment. At step 230, the method 200 includes periodically analyzing, by the one or more processors, the storage and execution policy information. The periodic analyzing may be performed at intervals of time (e.g., once per day, week, month, etc.), when changes to agreements or other mechanisms for capturing user preferences with respect to data storage and execution privacy requirements occur (e.g., using flags or other mechanisms), on an ad-hoc or as needed basis (e.g., upon receiving a request from the PPMMD 110 of FIG. 1), other types of triggering events, or combinations thereof.

At step 240, the method 200 includes generating, by the one or more processors, mapping data based on the periodic analyzing of the storage and execution policy information. As explained above with reference to FIG. 1, the mapping data may include information that indicates a data storage privacy level for controlling a minimum level of privacy for storage of user data by the execution environment. Additionally, the mapping data may include information that indicates an execution privacy level for controlling execution of one or more machine learning models by the execution environment, where the one or more machine learning models are configured to evaluate a cooperative dataset that includes data obtained from the plurality of users, as well as other user data captured by other computing devices, where the other user data may be subject to different data storage and privacy level requirements.

At step 250, the method 200 includes transmitting, by the one or more processors, the mapping data to a PPMMD (e.g., the PPMMD 110 of FIG. 1) adapted to configure the execution environment for applying one or more machine learning models to a dataset. As in the example described above with reference to FIG. 1, the dataset may be a cooperative dataset, and the mapping data may be utilized by the PPMMD to configure the execution environment in a manner that satisfies the criteria of the storage and execution privacy requirements for all data sources contributing data to the cooperative dataset, such as Hospitals A, B, and C in the example above.

At step 260, the method 200 includes providing, by the one or more processors, a first portion of the dataset to the execution environment for evaluation by the one or more machine learning models. As briefly described above, the dataset may be a cooperative data in which data (e.g., user data) is provided from multiple data sources (e.g., Hospitals A, B, and C in the example above). As such, the first portion of the cooperative dataset may include user data captured by the one or more processors based on services provided to the plurality of users, and a second portion of the cooperative dataset may be provided to the execution environment by other data sources of the plurality of data sources of the data cooperative. It is noted that the second portion of the cooperative dataset may include multiple sub-portions, such as user data from Hospitals B and C in the example above. In some aspects, the providing of the first portion of the dataset may be performed in response to a triggering event, such as a request from the PPMMD or another form of triggering event. Moreover, the providing may be performed subsequent to conditioning of the user data included in the first portion of the dataset. For example, in some aspects, the first portion of the dataset may be encrypted prior to providing the first portion of the dataset to the execution environment. Additional types of conditioning operations may additionally or alternatively be performed as well, such as to redact or obfuscate personally identifiable information from the first portion of the dataset, to filter the dataset (e.g., so that only a certain type of data is included, such as blood parameters and patient height/weight/age data), and the like.

As described above, the cooperative dataset may be evaluated by one or more machine learning models, such as to train the one or more machine learning models. Utilizing the cooperative dataset may enable a larger set of training data to be acquired for the training as compared to performing the training based on data from a single data source, thereby increasing the rate at which the one or more machine learning models may be trained and increasing the accuracy of the machine learnings (e.g., for predictive and/or diagnostic purposes). At step 270, the method 200 includes receiving, by the one or more processors, feedback based on the evaluation of the dataset by the one or more machine learning models. As described above, in the invention the feedback includes hyper parameters configured based on training of the one or more machine learning models using the cooperative dataset and the execution environment. The hyper parameters may be utilized to configure at least one machine learning model executable by the one or more processors (e.g., at one or more of the computing devices 140, 150A-150C), where the at least one machine learning model may be utilized to perform diagnostic or predictive analysis of user data. To illustrate, in the example above Hospital A may receive hyper parameters as part of the feedback derived from analyzing data provided by Hospitals A, B, and C in an execution environment and then the hyper parameters may be utilized to configure a machine learning model at computing device 150A for purposes of diagnosing patient medical conditions or predicting progression of patient medical conditions. Due to the use of hyper parameters that were trained on the cooperative dataset, the hyper parameters (or other model configuration information) may result in the machine learning model(s) providing more accurate diagnosis or prediction of patient medical conditions than would otherwise be possible in the same time frame using only Hospital A's data.

It is noted that other types of feedback may also be received at step 270 or at other stages of the method 200. For example, information regarding a unified storage-and-execution policy may be received prior to providing the first portion of the dataset to the execution environment. As described above, the unified storage-and-execution policy may be derived from the mapping data of all data sources contributing to the cooperative dataset and the unified storage-and-execution policy may guarantee data storage privacy levels and execution privacy levels for storage and use of the cooperative dataset by the execution environment that are equal to the data privacy requirements included in the mapping data or higher than the data privacy requirements included in the mapping data. That is to say, the execution environment may be configured (based on the mapping data of all data sources) to provide data storage and execution privacy levels that meet or exceed the data storage and execution privacy levels of all data sources, thereby ensuring that the handling of the cooperative dataset complies with all data source privacy requirements.

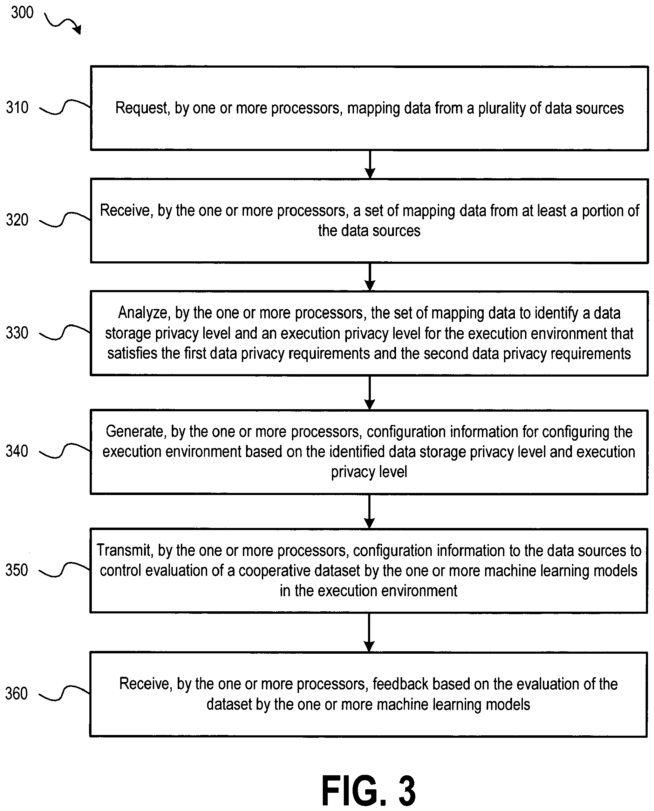

Referring to FIG. 3, a flow diagram of an exemplary method for dynamically configuring processes using a data cooperative having a plurality of data sources is shown as a method 300. In an aspect, steps of the method 300 may be stored as instructions (e.g., the instructions 116 of FIG. 1 stored at the memory 114 of the PPMMD 110 of FIG. 1) that, when executed by one or more processors (e.g., the one or more processors 112 of FIG. 1), cause the one or more processors to perform operations for dynamically configuring processes using a data cooperative having a plurality of data sources. For example, the plurality of data sources may include the computing devices 150A-150C of FIG. 1, which may form a data cooperative for providing a cooperative dataset (e.g., a dataset formed from datasets provided by each data source, such as the data provided by Hospitals A, B, and C in the example of FIG. 1) for analysis by an execution environment, where the execution environment is configured by the PPMMD 110 to satisfy data storage and execution privacy requirements or levels specified by each data source, as described in the example above with reference to FIG. 1.

At step 310, the method 300 includes requesting, by one or more processors, mapping data from a plurality of data sources. As in the example described with reference to FIG. 1, the plurality of data sources may include a plurality of hospitals (or another type of entity or service provider), and each of the hospitals may be associated with a computing device, such as the computing devices 150A-150C of FIG. 1. At step 320, the method 300 includes receiving, by the one or more processors, a set of mapping data from at least a portion of the data sources (e.g., not all data sources may participate in the data cooperative for a given iteration or for particular purposes, such as a hospital specializing in one type of medical practice not participating in a data cooperative for another type of medical practice). As explained above, the set of mapping data may include first mapping data received from a first data source (e.g., mapping data received from Hospital A) and second mapping data received from a second data source (e.g., mapping data received from Hospital B). The first mapping data may include information regarding first data storage and execution privacy requirements for storage and use of a first dataset by an execution environment and the second mapping data comprises information regarding second data storage and execution privacy requirements for storage and use of a second dataset by the execution environment.

At step 330, the method 300 includes analyzing, by the one or more processors, the set of mapping data to identify a data storage privacy level and an execution privacy level for the execution environment that satisfies the first data storage and execution privacy requirements and the second data storage and execution privacy requirements. The data storage privacy level may correspond to a level of data privacy for storing the cooperative dataset at the execution environment and the execution privacy level may correspond to a privacy level for evaluating the cooperative dataset by the execution environment. As explained above with reference to FIG. 1, analyzing the mapping data may involve an iterative process. The iterative process may begin by initializing a current data storage privacy level and a current execution privacy level based on the first mapping data. Once initialized, the iterative process may involve iteratively evaluating, by the one or more processors, additional mapping data to determine whether data privacy requirements of the additional mapping data require a higher data storage privacy level than the current data storage privacy level, a higher level of execution privacy than the current execution privacy level, or both. The one or more processors may set the current data storage privacy level to a data storage privacy level included in particular mapping data of the additional mapping data evaluated during a current iteration in response to the data storage privacy level included in the particular mapping data requiring a higher data storage privacy level than the current data storage privacy level set during a prior iteration, as in the example of FIG. 1 where the data storage privacy level was initialized based on mapping data for Hospital A and then set to the data storage privacy level specified in the mapping data for Hospital B since Hospital B's mapping data required a higher level of data storage privacy. Similarly, the one or more processors may set the current execution privacy level to an execution privacy level included in the particular mapping data in response to the execution privacy level included in the particular mapping data requiring a higher current execution privacy level than the current data storage privacy level set during the prior iteration. Subsequent to a last iteration, the current data storage privacy level and the current execution privacy level may be equal to or higher than all data storage privacy levels and all execution privacy levels included in the mapping data or higher than data storage privacy levels and execution privacy levels included in the mapping data.

At step 340, the method 300 includes generating, by the one or more processors, configuration information for configuring the execution environment based on the identified data storage privacy level and execution privacy level. In some aspects, the configuration information may be used to configure one or more executable modules. The executable modules may be configured to execute one or more processes for configuring the one or more machine learning models, configuring the execution environment, controlling evaluation of the cooperative dataset by the one or more machine learning models, validating the cooperative dataset is stored and/or removed by the execution environment, or combinations thereof. At step 350, the method 300 includes transmitting, by the one or more processors, at least a portion of the configuration information to the data sources to control evaluation of a cooperative dataset by one or more machine learning models in the execution environment. As described above, the cooperative dataset may include the first dataset and the second dataset. In some aspects, the transmitting may include transmitting the one or more executable modules to the execution environment based on the configuration information, which may involve transmitting the executable modules to computing devices associated with each data source, trusted computing devices (e.g., third party trusted computing devices), deploying the one or more executable modules to a cloud environment, and the like.

At step 360, the method 300 includes receiving, by the one or more processors, feedback based on the evaluation of the dataset by the one or more machine learning models. As described above, the feedback includes outputs from the machine learning model(s) and/or information derived from the machine learning model(s) including hyper parameters and optionally other information (e.g, accuracy information, performance information, etc.), or other types of information. In some aspects, the feedback received by the PPMMD may be utilized to generate feedback that is transmitted to computing devices associated with the one or more data sources. For example, the feedback may be utilized to configure or tune hyper parameters of one or more of the machine learning models and the tuned hyper parameters may be transmitted to the client-side computing devices for use in analyzing user data locally using the corresponding machine learning model(s), such as performing diagnostic or predictive operations using machine learning models and patient data by Hospitals A, B, and/or C.

As shown above, the methods 200 and 300 of FIGs. 2 and 3, respectively, as well as the system 100 of FIG. 1, provide a framework for configuring execution environments for evaluation of cooperative datasets provided by a plurality of data sources in a manner that guarantees compliance with privacy level requirements of all data sources. Moreover, the privacy levels may be configured in a multi-faceted manner, such as on a data storage and execution privacy level basis (e.g., independently) or based on a single privacy level (e.g., jointly). Because each participating entity is guaranteed at least a desired level of privacy requirements, participation in the data cooperative may be increased, allowing certain types of processes to be more widely adopted and utilized. This may be particularly relevant to machine learning techniques where larger datasets may be created through the use of cooperative datasets that include subsets or sub-portions of data provided from multiple data sources, thereby providing a more robust set of data that may be used to train the models, which will improve the accuracy of the models for predictive, diagnostic, or other purposes.

It is noted that other types of devices and functionality may be provided according to aspects of the present disclosure and discussion of specific devices and functionality herein have been provided for purposes of illustration, rather than by way of limitation. It is noted that the operations or steps of the method 200 of FIG. 2 and the method 300 of FIG. 3 may be performed in any order, or that operations of one method may be performed during performance of another method, such as the method 200 of FIG. 2 being performed on concert with operations of the method 300 of FIG. 3. It is also noted that the method 200 of FIG. 2 and the method 300 of FIG. 3 may also include other functionality or operations consistent with the description of the operations of the system 100 of FIG. 1.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Components, the functional blocks, and the modules described herein with respect to FIGs. 1-3) include processors, electronics devices, hardware devices, electronics components, logical circuits, memories, software codes, firmware codes, among other examples, or any combination thereof. In addition, features discussed herein may be implemented via specialized processor circuitry, via executable instructions, or combinations thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules, and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. In some implementations, a processor may also be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or any combination thereof. Implementations of the subject matter described in this specification also may be implemented as one or more computer programs, that is one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media can include random-access memory (RAM), read-only memory (ROM), electrically erasable programmable read-only memory (EEPROM), CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, hard disk, solid state disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to some other implementations as long as they do not depart from the scope of the invention as defined by the appended claims.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of any device as implemented.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, some other implementations are within the scope of the following claims. In some cases, the actions recited in the claims may be performed in a different order and still achieve desirable results.

As used herein, including in the claims, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. the term "or," when used in a list of two or more items, means that any one of the listed items may be employed by itself, or any combination of two or more of the listed items may be employed. For example, if a composition is described as containing components A, B, or C, the composition may contain A alone; B alone; C alone; A and B in combination; A and C in combination; B and C in combination; or A, B, and C in combination. Also, as used herein, including in the claims, "or" as used in a list of items prefaced by "at least one of" indicates a disjunctive list such that, for example, a list of "at least one of A, B, or C" means A or B or C or AB or AC or BC or ABC (that is A and B and C) or any of these in any combination thereof. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed aspect, the term "substantially" may be substituted with "within [a percentage] of" what is specified, where the percentage includes 0.1, 1, 5, and 10 percent; and the term "approximately" may be substituted with "within 10 percent of" what is specified. The phrase "and/or" means and or.

Although the aspects of the present disclosure and their advantages have been described in detail, it should be understood that various changes, substitutions and alterations can be made as long as they do not depart from the scope of the invention as defined by the appended claims. Moreover, the scope of the present application is not intended to be limited to the particular implementations of the process, machine, manufacture, composition of matter, means, methods and processes described in the specification. As one of ordinary skill in the art will readily appreciate from the present disclosure, processes, machines, manufacture, compositions of matter, means, methods, or operations, presently existing or later to be developed that perform substantially the same function or achieve substantially the same result as the corresponding aspects described herein may be utilized according to the present disclosure. The invention is defined by the appended claims.

## Claims

1. A method (200) for dynamically configuring processes using a data cooperative having a plurality of data sources (150A-150C), the method comprising:
receiving (210), by one or more processors (142), storage and execution policy information from a plurality of users, wherein the storage and execution policy information comprise criteria for storing user data and evaluating the user data in an execution environment;
storing (220), by the one or more processors (142), the storage and execution policy information at a memory (144);
periodically analyzing (230), by the one or more processors (142), the storage and execution policy information;
generating (240), by the one or more processors (142), mapping data based on the periodic analyzing of the storage and execution policy information, the mapping data indicating a data privacy level for storage and use of user data obtained from the plurality of users in an execution environment;
transmitting (250), by the one or more processors (142), the mapping data to a privacy preserving model management device (110) adapted to configure the execution environment for applying one or more machine learning models to a dataset, wherein the execution environment is configured in a manner that satisfies the criteria of the storage and execution policy information;
providing (260), by the one or more processors (142), a first portion of the dataset to the execution environment for evaluation by the one or more machine learning models, wherein the first portion of the dataset comprises user data captured by the one or more processors (142) based on services provided to the plurality of users, and wherein a second portion of the dataset is provided to the execution environment by other data sources of the plurality of data sources of the data cooperative; and
receiving (270), by the one or more processors (142), feedback based on the evaluation of the dataset by the one or more machine learning models, wherein the feedback comprises hyper parameters for configuring at least one machine learning model of the one or more machine learning models, and wherein the hyper parameters are configured based on training of the one or more machine learning models using the dataset.

2. The method (200) of claim 1, further comprising encrypting the first portion of the dataset prior to providing (260) the first portion of the dataset to the execution environment.

3. The method (200) of any one of claims 1 to 2, wherein further comprising:
configuring the at least one machine learning model based on the hyper parameters;
applying the at least one machine learning model to information obtained during provisioning of a service to the plurality of users; and
outputting a result based on the applying, wherein the result comprises a prediction determined by the at least one machine learning model based on the information obtained during the provisioning of the service to the user or a diagnostic outcome determined by the at least one machine learning model based on the information obtained during the provisioning of the service to the user.

4. The method (200) of any one of claims 1 to 3, wherein the feedback comprises information regarding data privacy requirements for storage and use of the dataset by the execution environment,
wherein, optionally, the data privacy requirements for storage and use of the dataset by the execution environment is equal to the data privacy requirements included in the mapping data or higher than the data privacy requirements included in the mapping data,
and/or wherein, optionally, the mapping data indicates whether the data privacy level for storage and use of the dataset by the execution environment is controlled independently or jointly.

5. The method (200) of any one of the preceding claims, wherein the execution environment comprises a trusted execution environment (TEE) (160), a distributed execution environment (151) including a portion associated with the one or more processors, or a cloud-based execution environment (134).

6. The method (200) of any one of the preceding claims, wherein the first portion of the dataset corresponds to a first services provider, and wherein the second portion of the dataset from the other data sources corresponds to one or more sets of data provided by one or more other service providers, each of the one or more other service providers uniquely corresponding to a particular set of data of the one or more sets of data.

7. A system (100) dynamically configuring processes using a data cooperative having a plurality of data sources (150A-150C), the system comprising:
a memory (144); and
one or more processors (142) communicatively coupled to the memory (144), the one or more processors (142) configured to:
request mapping data from the plurality of data sources (150A-150C);
receive a set of mapping data from at least a portion of the data sources (150A-150C), wherein the mapping data comprises first mapping data received from a first data source (150A-150C) and second mapping data received from a second data source (150A-150C), and wherein the first mapping data comprises information regarding first data storage and execution privacy requirements for storage and use of a first dataset by an execution environment and the second mapping data comprises information regarding second data storage and execution privacy requirements for storage and use of a second dataset by the execution environment;
analyze the set of mapping data to identify a data storage privacy level and an execution privacy level for the execution environment that satisfies the first data storage and execution privacy requirements and the second data storage and execution privacy requirements;
generate configuration information for configuring the execution environment based on the identified data storage privacy level and execution privacy level;
transmit at least a portion of the configuration information to the data sources (150A-150C) to control evaluation of a cooperative dataset by one or more machine learning models in the execution environment, wherein the cooperative dataset comprises the first dataset and the second dataset; and
receive feedback based on the evaluation of the dataset by the one or more machine learning models, wherein the feedback comprises hyper parameters for configuring a machine learning model based on training of the one or more machine learning models based on the cooperative dataset, and wherein one or more processors (142) are configured to:
transmit the hyper parameters to at least one data source (150A-150C) of the data sources (150A-150C).

8. The system (100) of claim 7, wherein analyzing the mapping data comprises:
initializing a current data storage privacy level and a current execution privacy level based on the first mapping data, wherein the data storage privacy level corresponds to a level of data privacy for storing the cooperative dataset at the execution environment and the current execution privacy level corresponds to a privacy level for evaluating the cooperative dataset by the execution environment; and
iteratively evaluating additional mapping data to determine whether data privacy requirements of the additional mapping data require a higher data storage privacy level than the current data storage privacy level, a higher level of execution privacy than the current execution privacy level, or both, wherein, optionally, the one or more processors (142) are configured to:
set the current data storage privacy level to a data storage privacy level included in particular mapping data of the additional mapping data evaluated during a current iteration in response to the data storage privacy level included in the particular mapping data requiring a higher data storage privacy level than the current data storage privacy level set during a prior iteration; and
set the current execution privacy level to an execution privacy level included in the particular mapping data in response to the execution privacy level included in the particular mapping data requiring a higher current execution privacy level than the current data storage privacy level set during the prior iteration, and/or wherein, optionally, subsequent to a last iteration, the current data storage privacy level and the current execution privacy level are equal to or higher than all data storage privacy levels and all execution privacy levels included in the mapping data or higher than data storage privacy levels and execution privacy levels included in the mapping data.

9. The system (100) of any one of claims 7 to 8, wherein the mapping data indicates whether the data storage privacy level and execution privacy level for each data source is controlled independently or jointly.

10. The system (100) of any one of claims 7 to 9, wherein the one or more processors (142) are configured to:
configure one or more executable modules based on the configuration information; and
transmit one or more executable modules to the execution environment based on the configuration information, the one or more executable modules configured to execute one or more processes for configuring the one or more machine learning models, configuring the execution environment, controlling evaluation of the cooperative dataset by the one or more machine learning models, validating the cooperative dataset is stored and/or removed by the execution environment, or combinations thereof.

11. The system (100) of any one of claims 7 to 10, wherein the execution environment comprises a trusted execution environment (TEE) (160), a distributed execution environment (151) including a portion associated with the one or more processors, or a cloud-based execution environment (134).

12. A non-transitory computer-readable storage medium storing instructions that, when executed by one or more processors (142), cause the one or more processors (142) to perform operations for dynamically configuring processes using a data cooperative having a plurality of data sources (150A-150C), the operations comprising:
requesting (310) mapping data from the plurality of data sources (150A-150C);
receiving (320) a set of mapping data from at least a portion of the data sources (150A-150C), wherein the set of mapping data comprises first mapping data received from a first data source (150A-150C) and second mapping data received from a second data source (150A-150C), and wherein the first mapping data comprises information regarding first data storage and execution privacy requirements for storage and use of a first dataset by an execution environment and the second mapping data comprises information regarding second data storage and execution privacy requirements for storage and use of a second dataset by the execution environment;
analyzing (330) the set of mapping data to identify a data storage privacy level and an execution privacy level for the execution environment that satisfies the first data storage and execution privacy requirements and the second data storage and execution privacy requirements;
generating (340) configuration information for configuring the execution environment based on the identified data storage privacy level and execution privacy level;
transmitting (350) at least a portion of the configuration information to the data sources (150A-150C) to control evaluation of a cooperative dataset by one or more machine learning models in the execution environment, wherein the cooperative dataset comprises the first dataset and the second dataset; and
receiving (360) feedback based on the evaluation of the dataset by the one or more machine learning models, wherein the feedback comprises hyper parameters for configuring a machine learning model based on training of the one or more machine learning models based on the cooperative dataset, and wherein one or more processors (142) are configured to:
transmit the hyper parameters to at least one data source of the data sources (150A-150C).

13. The non-transitory computer-readable storage medium of claim 12, wherein operations for analyzing the mapping data comprise:
initializing a current data storage privacy level and a current execution privacy level based on the first mapping data, wherein the data storage privacy level corresponds to a level of data privacy for storing the cooperative dataset at the execution environment and the current execution privacy level corresponds to a privacy level for evaluating the cooperative dataset by the execution environment; and
iteratively evaluating additional mapping data to determine whether data privacy requirements of the additional mapping data require a higher data storage privacy level than the current data storage privacy level, a higher level of execution privacy than the current execution privacy level, or both,
wherein the one or more processors (142) are configured to:
set the current data storage privacy level to a data storage privacy level included in particular mapping data of the additional mapping data evaluated during a current iteration in response to the data storage privacy level included in the particular mapping data requiring a higher data storage privacy level than the current data storage privacy level set during a prior iteration; and
set the current execution privacy level to an execution privacy level included in the particular mapping data in response to the execution privacy level included in the particular mapping data requiring a higher current execution privacy level than the current data storage privacy level set during the prior iteration, and
wherein, subsequent to a last iteration, the current data storage privacy level and the current execution privacy level are equal to or higher than all data storage privacy levels and all execution privacy levels included in the mapping data or higher than data storage privacy levels and execution privacy levels included in the mapping data.

14. The non-transitory computer-readable storage medium of claims 12 or 13, wherein the operations comprise:
configuring one or more executable modules based on the configuration information; and
transmitting one or more executable modules to the execution environment based on the configuration information, the one or more executable modules configured to execute one or more processes for configuring the one or more machine learning models, controlling evaluation of the cooperative dataset by the one or more machine learning models, validating the cooperative dataset is stored and/or removed by the execution environment, or combinations thereof.

## Patentansprüche

1. Ein Verfahren (200) zum dynamischen Konfigurieren von Prozessen unter Verwendung eines Datenverbundes bzw. einer Datenkooperative (*data cooperative*)*,* die eine Vielzahl von Datenquellen (150A-150C) aufweist, wobei das Verfahren Folgendes umfasst:
Empfangen (210), durch einen oder mehrere Prozessoren (142), von Speicher- und Ausführungs-Richtlinieninformationen von einer Vielzahl von Benutzern, wobei die Speicher- und Ausführungs-Richtlinieninformationen Kriterien zum Speichern von Benutzerdaten und zum Auswerten der Benutzerdaten in einer Ausführungsumgebung umfassen;
Speichern (220), durch den einen oder die mehreren Prozessoren (142), der Speicher- und Ausführungs-Richtlinieninformationen in einem Speicher (144);
periodisches Analysieren (230), durch den einen oder die mehreren Prozessoren (142), der Speicher- und Ausführungs-Richtlinieninformationen;
Erzeugen (240), durch den einen oder die mehreren Prozessoren (142), von Abbildungsdaten bzw. Mapping-Daten (*mapping data*) auf der Grundlage des periodischen Analysierens der Speicher- und Ausführungs-Richtlinieninformationen, wobei die Mapping-Daten ein Datenschutzniveau für die Speicherung und Verwendung von Benutzerdaten anzeigen, die von der Vielzahl von Benutzern in einer Ausführungsumgebung erhalten werden;
Übertragen (250), durch den einen oder die mehreren Prozessoren (142), der Mapping-Daten an eine privatsphärenbewahrende Modellverwaltungsvorrichtung (*privacy preserving model management device*) (110), die dazu ausgelegt ist, die Ausführungsumgebung für das Anwenden eines oder mehrerer Modelle für maschinelles Lernen auf einen Datensatz zu konfigurieren, wobei die Ausführungsumgebung auf eine Weise konfiguriert ist, die die Kriterien der Speicher-und Ausführungs-Richtlinieninformationen erfüllt;
Bereitstellen (260), durch den einen oder die mehreren Prozessoren (142), eines ersten Abschnitts des Datensatzes für die Ausführungsumgebung zur Auswertung durch das eine oder die mehreren Modelle für maschinelles Lernen, wobei der erste Abschnitt des Datensatzes Benutzerdaten umfasst, die durch den einen oder die mehreren Prozessoren (142) auf der Grundlage von Diensten erfasst werden, die für die Vielzahl von Benutzern bereitgestellt werden, und wobei ein zweiter Abschnitt des Datensatzes für die Ausführungsumgebung durch andere Datenquellen der Vielzahl von Datenquellen der Datenkooperative bereitgestellt wird; und
Empfangen (270), durch den einen oder die mehreren Prozessoren (142), einer Rückmeldung basierend auf der Auswertung des Datensatzes durch das eine oder die mehreren Modelle für maschinelles Lernen, wobei die Rückmeldung Hyperparameter zum Konfigurieren mindestens eines Modells für maschinelles Lernen des einen oder der mehreren Modelle für maschinelles Lernen umfasst, und wobei die Hyperparameter auf der Grundlage des Trainierens des einen oder der mehreren Modelle für maschinelles Lernen unter Verwendung des Datensatzes konfiguriert werden.

2. Das Verfahren (200) nach Anspruch 1, das ferner das Verschlüsseln des ersten Abschnitts des Datensatzes vor dem Bereitstellen (260) des ersten Abschnitts des Datensatzes für die Ausführungsumgebung umfasst.

3. Das Verfahren (200) nach irgendeinem der Ansprüche von 1 bis 2, wobei es ferner Folgendes umfasst:
Konfigurieren des mindestens einen Modells für maschinelles Lernen auf der Grundlage der Hyperparameter;
Anwenden des mindestens einen Modells für maschinelles Lernen auf Informationen, die während der Bereitstellung eines Dienstes für die Vielzahl von Benutzern erhalten wurden; und
Ausgeben eines Ergebnisses auf der Grundlage des Anwendens, wobei das Ergebnis eine Vorhersage umfasst, die von dem mindestens einen Modell für maschinelles Lernen auf der Grundlage der während der Bereitstellung des Dienstes für den Benutzer erhaltenen Informationen bestimmt wird, oder ein Diagnoseergebnis, das von dem mindestens einen Modell für maschinelles Lernen auf der Grundlage der während der Bereitstellung des Dienstes für den Benutzer erhaltenen Informationen bestimmt wird.

4. Das Verfahren (200) nach irgendeinem der Ansprüche von 1 bis 3, wobei die Rückmeldung Informationen bezüglich der Datenschutzanforderungen für die Speicherung und Verwendung des Datensatzes durch die Ausführungsumgebung beinhaltet,
wobei optional die Datenschutzanforderungen für die Speicherung und Verwendung des Datensatzes durch die Ausführungsumgebung gleich den in den Mapping-Daten enthaltenen Datenschutzanforderungen oder höher als die in den Mapping-Daten enthaltenen Datenschutzanforderungen sind,
und/oder wobei optional die Mapping-Daten angeben, ob das Datenschutzniveau für die Speicherung und Verwendung des Datensatzes durch die Ausführungsumgebung unabhängig oder gemeinsam gesteuert wird.

5. Das Verfahren (200) nach irgendeinem der vorstehenden Ansprüche, wobei die Ausführungsumgebung eine vertrauenswürdige Ausführungsumgebung (*trusted execution environment* - TEE) (160), eine verteilte Ausführungsumgebung (151), die einen dem einen oder mehreren Prozessoren zugeordneten Teil enthält, oder eine cloudbasierte Ausführungsumgebung (134) umfasst.

6. Das Verfahren (200) nach irgendeinem der vorstehenden Ansprüche, wobei der erste Abschnitt des Datensatzes einem ersten Dienstanbieter entspricht, und wobei der zweite Abschnitt des Datensatzes aus den anderen Datenquellen einem oder mehreren Datensätzen entspricht, die von einem oder mehreren anderen Dienstanbietern bereitgestellt werden, wobei jeder des oder der anderen Dienstanbieter eindeutig einem bestimmten Datensatz des einen oder der mehreren Datensätze entspricht.

7. Ein System (100) zum dynamischen Konfigurieren von Prozessen unter Verwendung eines Datenverbundes bzw. einer Datenkooperative (*data cooperative*), die eine Vielzahl von Datenquellen (150A-150C) aufweist, wobei das System Folgendes umfasst:
einen Speicher (144); und
einen oder mehrere Prozessoren (142), die kommunikativ mit dem Speicher (144) verbunden sind, wobei der eine oder die mehreren Prozessoren (142) konfiguriert sind, um Folgendes zu bewerkstelligen:
Anfordern von Mapping-Daten von der Vielzahl von Datenquellen (150A-150C);
Empfangen eines Satzes von Mapping-Daten von mindestens einem Teil der Datenquellen (150A-150C), wobei die Mapping-Daten Folgendes umfassen: erste Mapping-Daten, die von einer ersten Datenquelle (150A-150C) empfangen werden, und zweite Mapping-Daten, die von einer zweiten Datenquelle (150A-150C) empfangen werden, und wobei die ersten Mapping-Daten Informationen bezüglich erster Datenspeicher- und Ausführungs-Datenschutzanforderungen für die Speicherung und Verwendung eines ersten Datensatzes durch eine Ausführungsumgebung umfassen, und wobei die zweiten Mapping-Daten Informationen bezüglich zweiter Datenspeicher- und Ausführungs-Datenschutzanforderungen für die Speicherung und Verwendung eines zweiten Datensatzes durch die Ausführungsumgebung umfassen;
Analysieren des Satzes von Mapping-Daten, um ein Datenspeicher-Datenschutzniveau und ein Ausführungs-Datenschutzniveau für die Ausführungsumgebung zu identifizieren, das die ersten Datenspeicher- und Ausführungs-Datenschutzanforderungen und die zweiten Datenspeicher- und Ausführungs-Datenschutzanforderungen erfüllt;
Erzeugen von Konfigurationsinformationen zum Konfigurieren der Ausführungsumgebung auf der Grundlage des identifizierten Datenschutzniveaus für die Datenspeicherung und des Datenschutzniveaus für die Ausführung;
Übertragen mindestens eines Teils der Konfigurationsinformationen an die Datenquellen (150A-150C), um die Auswertung eines kooperativen Datensatzes durch ein oder mehrere Modelle für maschinelles Lernen in der Ausführungsumgebung zu steuern, wobei der kooperative Datensatz den ersten Datensatz und den zweiten Datensatz umfasst; und
Empfangen einer Rückmeldung auf der Grundlage der Auswertung des Datensatzes durch das eine oder die mehreren Modelle für maschinelles Lernen, wobei die Rückmeldung Hyperparameter umfasst zum Konfigurieren eines Modells für maschinelles Lernen auf der Grundlage des Trainierens des einen oder der mehreren Modelle für maschinelles Lernen auf der Grundlage des kooperativen Datensatzes, und wobei ein oder mehrere Prozessoren (142) konfiguriert sind, um Folgendes zu bewerkstelligen:
Übertragen der Hyperparameter an mindestens eine Datenquelle (150A-150C) der Datenquellen (150A-150C).

8. Das System (100) nach Anspruch 7, wobei das Analysieren der Mapping-Daten Folgendes umfasst:
Initialisieren eines aktuellen Datenspeicher-Datenschutzniveaus und eines aktuellen Ausführungs-Datenschutzniveaus auf der Grundlage der ersten Mapping-Daten, wobei das Datenspeicher-Datenschutzniveau einem Niveau an Datenschutz für das Speichern des kooperativen Datensatzes in der Ausführungsumgebung entspricht, und das aktuelle Ausführungs-Datenschutzniveau einem Niveau an Datenschutz für das Auswerten des kooperativen Datensatzes durch die Ausführungsumgebung entspricht; und
iteratives Auswerten von zusätzlichen Mapping-Daten, um festzustellen, ob die Datenschutzanforderungen der zusätzlichen Mapping-Daten ein höheres Datenspeicher-Datenschutzniveau als das aktuelle Datenspeicher-Datenschutzniveau, ein höheres Ausführungs-Datenschutzniveau als das aktuelle Ausführungs-Datenschutzniveau oder beides erfordern, wobei optional der eine oder die mehreren Prozessoren (142) konfiguriert sind, um Folgendes zu bewerkstelligen:
Setzen des aktuellen Datenspeicher-Datenschutzniveaus auf ein Datenspeicher-Datenschutzniveau, das in bestimmten Mapping-Daten der zusätzlichen Mapping-Daten enthalten ist, die während einer aktuellen Iteration ausgewertet werden, als Reaktion darauf, dass das Datenspeicher-Datenschutzniveau, das in den bestimmten Mapping-Daten enthalten ist, ein höheres Datenspeicher-Datenschutzniveau erfordert als das aktuelle Datenspeicher-Datenschutzniveau, das während einer vorherigen Iteration gesetzt wurde; und
Setzen des aktuellen Ausführungs-Datenschutzniveaus auf ein Ausführungs-Datenschutzniveau, das in den bestimmten Mapping-Daten enthalten ist, als Reaktion darauf, dass das Ausführungs-Datenschutzniveau, das in den bestimmten Mapping-Daten enthalten ist, ein höheres aktuelles Ausführungs-Datenschutzniveau erfordert als das aktuelle Datenspeicher-Datenschutzniveau, das während der vorherigen Iteration gesetzt wurde, und/oder wobei, optional, nach einer letzten Iteration, das aktuelle Datenspeicher-Datenschutzniveau und das aktuelle Ausführungs-Datenschutzniveau gleich oder höher sind als alle Datenspeicher-Datenschutzniveaus und alle Ausführungs-Datenschutzniveaus, die in den Mapping-Daten enthalten sind, oder höher sind als Datenspeicher-Datenschutzniveaus und Ausführungs-Datenschutzniveaus, die in den Mapping-Daten enthalten sind.

9. Das System (100) nach irgendeinem der Ansprüche von 7 bis 8, wobei die Mapping-Daten angeben, ob das Datenspeicher-Datenschutzniveau und das Ausführungs-Datenschutzniveau für jede Datenquelle unabhängig oder gemeinsam gesteuert wird.

10. Das System (100) nach irgendeinem der Ansprüche von 7 bis 9, wobei der eine oder die mehreren Prozessoren (142) dazu konfiguriert sind, Folgendes zu bewerkstelligen:
Konfigurieren eines oder mehrerer ausführbarer Module basierend auf den Konfigurationsinformationen; und
Übertragen eines oder mehrerer ausführbarer Module an die Ausführungsumgebung auf der Grundlage der Konfigurationsinformationen, wobei das eine oder die mehreren ausführbaren Module so konfiguriert sind, dass sie einen oder mehrere Prozesse ausführen zum Konfigurieren des einen oder der mehreren Modelle für maschinelles Lernen, zum Konfigurieren der Ausführungsumgebung, zum Steuern der Auswertung des kooperativen Datensatzes durch das eine oder die mehreren Modelle für maschinelles Lernen, zum Validieren, dass der kooperative Datensatz durch die Ausführungsumgebung gespeichert und/oder entfernt wird, oder Kombinationen davon.

11. Das System (100) nach irgendeinem der Ansprüche von 7 bis 10, wobei die Ausführungsumgebung eine vertrauenswürdige Ausführungsumgebung (*trusted execution environment* - TEE) (160), eine verteilte Ausführungsumgebung (151), die einen dem einen oder mehreren Prozessoren zugeordneten Teil enthält, oder eine cloudbasierte Ausführungsumgebung (134) umfasst.

12. Ein nicht-flüchtiges computerlesbares Speichermedium, das Anweisungen speichert, die, wenn sie von einem oder mehreren Prozessoren (142) ausgeführt werden, den einen oder die mehreren Prozessoren (142) dazu veranlassen, Operationen zum dynamischen Konfigurieren von Prozessen unter Verwendung eines Datenverbundes bzw. einer Datenkooperative (*data cooperative*) mit einer Vielzahl von Datenquellen (150A-150C) durchzuführen, wobei die Operationen Folgendes umfassen:
Anfordern (310) von Mapping-Daten von der Vielzahl von Datenquellen (150A-150C);
Empfangen (320) eines Satzes von Mapping-Daten von mindestens einem Teil der Datenquellen (150A-150C), wobei der Satz von Mapping-Daten Folgendes umfasst: erste Mapping-Daten, die von einer ersten Datenquelle (1S5OA-150C) empfangen werden, und zweite Mapping-Daten, die von einer zweiten Datenquelle (150A-150C) empfangen werden, und wobei die ersten Mapping-Daten Informationen bezüglich erster Datenspeicher- und Ausführungs-Datenschutzanforderungen für die Speicherung und Verwendung eines ersten Datensatzes durch eine Ausführungsumgebung umfassen, und die zweiten Mapping-Daten Informationen bezüglich zweiter Datenspeicher- und Ausführungs-Datenschutzanforderungen für die Speicherung und Verwendung eines zweiten Datensatzes durch die Ausführungsumgebung umfassen;
Analysieren (330) des Satzes von Mapping-Daten, um ein Datenspeicher-Datenschutzniveau und ein Ausführungs-Datenschutzniveau für die Ausführungsumgebung zu identifizieren, die die ersten Datenspeicher- und Ausführungs-Datenschutzanforderungen und die zweiten Datenspeicher- und Ausführungs-Datenschutzanforderungen erfüllt;
Erzeugen (340) von Konfigurationsinformationen zum Konfigurieren der Ausführungsumgebung auf der Grundlage des identifizierten Datenspeicher-Datenschutzniveaus und des identifizierten Ausführungs-Datenschutzniveaus;
Übertragen (350) mindestens eines Teils der Konfigurationsinformationen an die Datenquellen (150A-150C), um die Auswertung eines kooperativen Datensatzes durch ein oder mehrere Modelle für maschinelles Lernen in der Ausführungsumgebung zu steuern, wobei der kooperative Datensatz den ersten Datensatz und den zweiten Datensatz umfasst; und
Empfangen (360) einer Rückmeldung auf der Grundlage der Auswertung des Datensatzes durch das eine oder die mehreren Modelle für maschinelles Lernen, wobei die Rückmeldung Hyperparameter umfasst zum Konfigurieren eines Modells für maschinelles Lernen auf der Grundlage des Trainierens des einen oder der mehreren Modelle für maschinelles Lernen auf der Grundlage des kooperativen Datensatzes, und wobei ein oder mehrere Prozessoren (142) konfiguriert sind, um Folgendes zu bewerkstelligen:
Übertragen der Hyperparameter an mindestens eine Datenquelle der Datenquellen (150A- 150C).

13. Das nicht-flüchtige computerlesbare Speichermedium nach Anspruch 12, wobei die Operationen zum Analysieren der Mapping-Daten Folgendes umfassen:
Initialisieren eines aktuellen Datenspeicher-Datenschutzniveaus und eines aktuellen Ausführungs-Datenschutzniveaus auf der Grundlage der ersten Mapping-Daten, wobei das Datenspeicher-Datenschutzniveau einem Niveau an Datenschutz für das Speichern des kooperativen Datensatzes in der Ausführungsumgebung entspricht, und das aktuelle Ausführungs-Datenschutzniveau einem Niveau an Datenschutz für das Auswerten des kooperativen Datensatzes durch die Ausführungsumgebung entspricht; und
iteratives Auswerten von zusätzlichen Mapping-Daten, um festzustellen, ob die Datenschutzanforderungen der zusätzlichen Mapping-Daten ein höheres Datenspeicher-Datenschutzniveau als das aktuelle Datenspeicher-Datenschutzniveau, ein höheres Ausführungs-Datenschutzniveau als das aktuelle Ausführungs-Datenschutzniveau oder beides erfordern,
wobei der eine oder die mehreren Prozessoren (142) konfiguriert sind, um Folgendes zu bewerkstelligen:
Setzen des aktuellen Datenspeicher-Datenschutzniveaus auf ein Datenspeicher-Datenschutzniveau, das in bestimmten Mapping-Daten der zusätzlichen Mapping-Daten enthalten ist, die während einer aktuellen Iteration ausgewertet werden, als Reaktion darauf, dass das Datenspeicher-Datenschutzniveau, das in den bestimmten Mapping-Daten enthalten ist, ein höheres Datenspeicher-Datenschutzniveau erfordert als das aktuelle Datenspeicher-Datenschutzniveau, das während einer vorherigen Iteration gesetzt wurde; und
Setzen des aktuellen Ausführungs-Datenschutzniveaus auf ein Ausführungs-Datenschutzniveau, das in den bestimmten Mapping-Daten enthalten ist, als Reaktion darauf, dass das Ausführungs-Datenschutzniveau, das in den bestimmten Mapping-Daten enthalten ist, ein höheres aktuelles Ausführungs-Datenschutzniveau erfordert als das aktuelle Datenspeicher-Datenschutzniveau, das während der vorherigen Iteration gesetzt wurde, und
wobei, nach einer letzten Iteration, das aktuelle Datenspeicher-Datenschutzniveau und das aktuelle Ausführungs-Datenschutzniveau gleich oder höher sind als alle Datenspeicher-Datenschutzniveaus und alle Ausführungs-Datenschutzniveaus, die in den Mapping-Daten enthalten sind, oder höher sind als Datenspeicher-Datenschutzniveaus und Ausführungs-Datenschutzniveaus, die in den Mapping-Daten enthalten sind.

14. Das nicht-flüchtige computerlesbare Speichermedium nach Anspruch 12 oder 13, wobei die Operationen Folgendes umfassen:
Konfigurieren eines oder mehrerer ausführbarer Module basierend auf den Konfigurationsinformationen; und
Übertragen eines oder mehrerer ausführbarer Module an die Ausführungsumgebung auf der Grundlage der Konfigurationsinformationen, wobei das eine oder die mehreren ausführbaren Module so konfiguriert sind, dass sie einen oder mehrere Prozesse ausführen zum Konfigurieren des einen oder der mehreren Modelle für maschinelles Lernen, zum Steuern der Auswertung des kooperativen Datensatzes durch das eine oder die mehreren Modelle für maschinelles Lernen, zum Validieren, dass der kooperative Datensatz durch die Ausführungsumgebung gespeichert und/oder entfernt wird, oder Kombinationen davon.

## Revendications

1. Un procédé (200) pour configurer dynamiquement des processus à l'aide d'une coopérative de données (*data cooperative*) comprenant une pluralité de sources de données (150A-150C), le procédé comprenant le fait de :
recevoir (210), par un ou plusieurs processeurs (142), des informations de politique en matière de stockage et d'exécution provenant d'une pluralité d'utilisateurs, sachant que les informations de politique en matière de stockage et d'exécution comprennent des critères pour le stockage des données de l'utilisateur et l'évaluation des données de l'utilisateur dans un environnement d'exécution ;
stocker (220), par le ou les processeurs (142), les informations de politique en matière de stockage et d'exécution dans une mémoire (144) ;
analyser périodiquement (230), par le ou les processeurs (142), les informations de politique en matière de stockage et d'exécution ;
générer (240), par le ou les processeurs (142), des données de mappage sur la base de l'analyse périodique des informations de politique en matière de stockage et d'exécution, les données de mappage indiquant un niveau de confidentialité des données pour le stockage et l'utilisation des données d'utilisateur obtenues de la part de la pluralité d'utilisateurs dans un environnement d'exécution ;
transmettre (250), par le ou les processeurs (142), les données de mappage à un dispositif de gestion de modèle de préservation de confidentialité (110) adapté pour configurer l'environnement d'exécution pour appliquer un ou plusieurs modèles d'apprentissage automatique à un ensemble de données, sachant que l'environnement d'exécution est configuré d'une manière qui satisfait aux critères des informations de politique en matière de stockage et d'exécution ;
fournir (260), par le ou les processeurs (142), une première portion de l'ensemble de données à l'environnement d'exécution pour une évaluation par le ou les modèles d'apprentissage automatique, sachant que la première portion de l'ensemble de données comprend des données d'utilisateur capturées par le ou les processeurs (142) sur la base de services fournis à la pluralité d'utilisateurs, et sachant qu'une deuxième portion de l'ensemble de données est fournie à l'environnement d'exécution par d'autres sources de données de la pluralité de sources de données de la coopérative de données ; et de
recevoir (270), par le ou les processeurs (142), un retour basé sur l'évaluation de l'ensemble de données par le ou les modèles d'apprentissage automatique, sachant que le retour comprend des hyper-paramètres pour configurer au moins un modèle d'apprentissage automatique parmi le ou les modèles d'apprentissage automatique, et sachant que les hyper-paramètres sont configurés sur la base de l'entraînement du ou des modèles d'apprentissage automatique à l'aide de l'ensemble de données.

2. Le procédé d'après la revendication 1, comprenant en outre le fait de chiffrer la première portion de l'ensemble de données avant de fournir (260) la première portion de l'ensemble de données à l'environnement d'exécution.

3. Le procédé (200) d'après l'une quelconque des revendications de 1 à 2, sachant qu'il comprend en outre le fait de :
configurer le au moins un modèle d'apprentissage automatique sur la base des hyper-paramètres ;
appliquer le ou les modèles d'apprentissage automatique aux informations obtenues lors du provisionnement d'un service à la pluralité d'utilisateurs ; et de
émettre un résultat basé sur l'application, sachant que le résultat comprend une prédiction déterminée par le au moins un modèle d'apprentissage automatique sur la base des informations obtenues lors de la fourniture du service à l'utilisateur ou un résultat diagnostic déterminé par le au moins un modèle d'apprentissage automatique sur la base des informations obtenues lors de la fourniture du service à l'utilisateur.

4. Le procédé (200) d'après l'une quelconque des revendications de 1 à 3, sachant que le retour comprend des informations concernant les exigences en matière de confidentialité des données pour le stockage et l'utilisation de l'ensemble de données par l'environnement d'exécution,
sachant que, facultativement, les exigences en matière de confidentialité des données pour le stockage et l'utilisation de l'ensemble de données par l'environnement d'exécution sont égales aux exigences en matière de confidentialité des données incluses dans les données de mappage ou supérieures aux exigences en matière de confidentialité des données incluses dans les données de mappage,
et/ou sachant que, facultativement, les données de mappage indiquent si le niveau de confidentialité des données pour le stockage et l'utilisation de l'ensemble de données par l'environnement d'exécution est commandé (*controlled*) de manière indépendante ou conjointe.

5. Le procédé (200) d'après l'une quelconque des revendications précédentes, sachant que l'environnement d'exécution comprend un environnement d'exécution sécurisé (*trusted execution environment* - TEE) (160), un environnement d'exécution distribué (151) incluant une partie associée au ou aux processeurs, ou un environnement d'exécution en nuage (134).

6. Le procédé (200) d'après l'une quelconque des revendications précédentes, sachant que la première portion de l'ensemble de données correspond à un premier fournisseur de services, et sachant que la deuxième portion de l'ensemble de données provenant des autres sources de données correspond à un ou plusieurs ensembles de données fournis par un ou plusieurs autres fournisseurs de services, chacun des un ou plusieurs fournisseurs de services correspondant uniquement à un ensemble particulier de données parmi les ou les ensembles de données.

7. Un système (100) configurant dynamiquement des processus à l'aide d'une coopérative de données (*data cooperative*) présentant une pluralité de sources de données (150A-150C), le système comprenant :
une mémoire (144) ; et
un ou plusieurs processeurs (142) couplés de manière communicative à la mémoire (144), le ou les processeurs (142) étant configurés pour :
demander des données de mappage à la pluralité de sources de données (150A-150C) ;
recevoir un ensemble de données de mappage de la part d'au moins une partie des sources de données (150A-150C), sachant que les données de mappage comprennent des premières données de mappage reçues de la part d'une première source de données (150A-150C) et des deuxièmes données de mappage reçues de la part d'une deuxième source de données (150A-150C), et sachant que les premières données de mappage comprennent des informations concernant des premières exigences en matière de confidentialité de stockage et d'exécution des données pour le stockage et l'utilisation d'un premier ensemble de données par un environnement d'exécution, et que les deuxièmes données de mappage comprennent des informations concernant des deuxièmes exigences en matière de confidentialité de stockage et d'exécution des données pour le stockage et l'utilisation d'un deuxième ensemble de données par l'environnement d'exécution ;
analyser l'ensemble des données de mappage pour identifier un niveau de confidentialité du stockage des données et un niveau de confidentialité d'exécution pour l'environnement d'exécution qui satisfont aux premières exigences en matière de confidentialité du stockage des données et de l'exécution et aux deuxièmes exigences en matière de confidentialité du stockage des données et de l'exécution ;
générer des informations de configuration pour configurer l'environnement d'exécution sur la base du niveau de confidentialité du stockage des données et du niveau de confidentialité d'exécution identifiés ;
transmettre au moins une partie des informations de configuration aux sources de données (150A-150C) pour commander l'évaluation d'un ensemble de données de coopérative (*cooperative data set*) par un ou plusieurs modèles d'apprentissage automatique dans l'environnement d'exécution, sachant que l'ensemble de données de coopérative comprend le premier ensemble de données et le deuxième ensemble de données ; et pour
recevoir un retour basé sur l'évaluation de l'ensemble de données par le ou les modèles d'apprentissage automatique,
sachant que le retour comprend des hyper-paramètres pour configurer un modèle d'apprentissage automatique sur la base d'un entraînement du ou des modèles d'apprentissage automatique basé sur l'ensemble de données de coopérative, et sachant qu'un ou plusieurs processeurs (142) sont configurés pour :
transmettre les hyper-paramètres à au moins une source de données (150A-150C) parmi les sources de données (150A-150C).

8. Le système (100) d'après la revendication 7, sachant que le fait d'analyser les données de mappage comprend le fait de :
initialiser un niveau de confidentialité du stockage des données actuel et d'un niveau de confidentialité d'exécution actuel sur la base des premières données de mappage, sachant que le niveau de confidentialité du stockage des données correspond à un niveau de confidentialité des données pour le stockage de l'ensemble de données de coopérative au niveau de l'environnement d'exécution, et que le niveau de confidentialité d'exécution actuel correspond à un niveau de confidentialité pour l'évaluation de l'ensemble de données de coopérative par l'environnement d'exécution ; et de
évaluer itérativement des données de mappage supplémentaires pour déterminer si des exigences en matière de confidentialité de données des données de mappage supplémentaires nécessitent un niveau de confidentialité du stockage des données plus élevé que le niveau de confidentialité du stockage des données actuel, un niveau de confidentialité d'exécution plus élevé que le niveau de confidentialité d'exécution actuel, ou les deux, sachant que, facultativement, le ou les processeurs (142) sont configurés pour :
établir le niveau de confidentialité du stockage des données actuel à un niveau de confidentialité du stockage des données inclus dans des données de mappage particulières des données de mappage supplémentaires évaluées au cours d'une itération actuelle, en réponse au fait que le niveau de confidentialité du stockage des données inclus dans les données de mappage particulières nécessite un niveau de confidentialité du stockage des données plus élevé que le niveau de confidentialité du stockage des données actuel établi au cours d'une itération antérieure ; et de
établir le niveau de confidentialité d'exécution actuel à un niveau de confidentialité d'exécution inclus dans les données de mappage particulières en réponse au fait que le niveau de confidentialité d'exécution inclus dans les données de mappage particulières nécessite un niveau de confidentialité d'exécution actuel plus élevé que le niveau de confidentialité du stockage des données actuel établi au cours de l'itération précédente, et/ou sachant que, facultativement, après une dernière itération, le niveau de confidentialité du stockage des données actuel et le niveau de confidentialité d'exécution actuel sont égaux ou supérieurs à tous les niveaux de confidentialité du stockage de données et à tous les niveaux de confidentialité d'exécution inclus dans les données de mappage, ou supérieurs aux niveaux de confidentialité du stockage de données et aux niveaux de confidentialité d'exécution inclus dans les données de mappage.

9. Le système (100) d'après l'une quelconque des revendications de 7 à 8, sachant que les données de mappage indiquent si le niveau de confidentialité du stockage des données et le niveau de confidentialité d'exécution pour chaque source de données sont commandés indépendamment ou conjointement.

10. Le système (100) d'après l'une quelconque des revendications de 7 à 9, sachant que le ou les processeurs (142) sont configurés pour :
configurer un ou plusieurs modules exécutables sur la base des informations de configuration ; et pour
transmettre un ou plusieurs modules exécutables à l'environnement d'exécution sur la base des informations de configuration, le ou les modules exécutables étant configurés pour exécuter un ou plusieurs processus pour configurer le ou les modèles d'apprentissage automatique, configurer l'environnement d'exécution, commander l'évaluation de l'ensemble de données de coopérative par le ou les modèles d'apprentissage automatique, valider le fait que l'ensemble de données de coopérative est stocké et/ou supprimé par l'environnement d'exécution, ou des combinaisons de ceux-ci.

11. Le système (100) d'après l'une quelconque des revendications de 7 à 10, sachant que l'environnement d'exécution comprend un environnement d'exécution sécurisé (*trusted execution environment* - TEE) (160), un environnement d'exécution distribué (151) incluant une partie associée à l'un ou plusieurs processeurs, ou un environnement d'exécution en nuage (134).

12. Un support de stockage non transitoire lisible par ordinateur stockant des instructions qui, lorsqu'elles sont exécutées par un ou plusieurs processeurs (142), amènent le ou les processeurs (142) à effectuer des opérations pour configurer dynamiquement des processus à l'aide d'une coopérative de données (*data cooperative*) présentant une pluralité de sources de données (150A-150C), les opérations comprenant le fait de :
demander (310) des données de mappage à partir de la pluralité de sources de données (150A-150C) ;
recevoir (320) un ensemble de données de mappage de la part d'au moins une partie des sources de données (150A-150C), sachant que l'ensemble de données de mappage comprend des premières données de mappage reçues de la part d'une première source de données (150A-150C) et des deuxièmes données de mappage reçues de la part d'une deuxième source de données (150A-150C), et sachant que les premières données de mappage comprennent des informations concernant des premières exigences en matière de confidentialité de stockage et d'exécution des données pour le stockage et l'utilisation d'un premier ensemble de données par un environnement d'exécution, et que les deuxièmes données de mappage comprennent des informations concernant des deuxièmes exigences en matière de confidentialité de stockage et d'exécution des données pour le stockage et l'utilisation d'un deuxième ensemble de données par l'environnement d'exécution ;
analyser (330) l'ensemble des données de mappage pour identifier un niveau de confidentialité du stockage des données et un niveau de confidentialité d'exécution pour l'environnement d'exécution qui satisfait aux premières exigences en matière de confidentialité du stockage des données et de l'exécution et aux deuxièmes exigences en matière de confidentialité du stockage des données et de l'exécution ;
générer (340) des informations de configuration pour configurer l'environnement d'exécution sur la base du niveau de confidentialité du stockage des données et du niveau de confidentialité d'exécution identifiés ;
transmettre (350) au moins une partie des informations de configuration aux sources de données (150A-150C) pour commander l'évaluation d'un ensemble de données de coopérative par un ou plusieurs modèles d'apprentissage automatique dans l'environnement d'exécution, sachant que l'ensemble de données de coopérative comprend le premier ensemble de données et le deuxième ensemble de données ; et de
recevoir (360) un retour basé sur l'évaluation de l'ensemble de données par le ou les modèles d'apprentissage automatique, sachant que le retour comprend des hyper-paramètres pour configurer un modèle d'apprentissage automatique sur la base d'un entraînement du ou des modèles d'apprentissage automatique basé sur l'ensemble de données de coopérative, et sachant qu'un ou plusieurs processeurs (142) sont configurés pour :
transmettre les hyper-paramètres à au moins une source de données parmi les sources de données (150A- 150C).

13. Le support de stockage non transitoire lisible par ordinateur d'après la revendication 12, sachant que les opérations consistant à analyser les données de mappage comprennent le fait de :
initialiser un niveau de confidentialité du stockage des données actuel et d'un niveau de confidentialité d'exécution actuel sur la base des premières données de mappage, sachant que le niveau de confidentialité du stockage des données correspond à un niveau de confidentialité des données pour le stockage de l'ensemble de données de coopérative au niveau de l'environnement d'exécution, et que le niveau de confidentialité d'exécution actuel correspond à un niveau de confidentialité pour l'évaluation de l'ensemble de données de coopérative par l'environnement d'exécution ; et de
évaluer itérativement des données de mappage supplémentaires pour déterminer si des exigences en matière de confidentialité de données des données de mappage supplémentaires nécessitent un niveau de confidentialité du stockage des données plus élevé que le niveau de confidentialité du stockage des données actuel, un niveau de confidentialité d'exécution plus élevé que le niveau de confidentialité d'exécution actuel, ou les deux,
sachant que le ou les processeurs (142) sont configurés pour :
établir le niveau de confidentialité du stockage des données actuel à un niveau de confidentialité du stockage des données inclus dans des données de mappage particulières des données de mappage supplémentaires évaluées au cours d'une itération actuelle, en réponse au fait que le niveau de confidentialité du stockage des données inclus dans les données de mappage particulières nécessite un niveau de confidentialité du stockage des données plus élevé que le niveau de confidentialité du stockage des données actuel établi au cours d'une itération antérieure ; et de
établir le niveau de confidentialité d'exécution actuel à un niveau de confidentialité d'exécution inclus dans les données de mappage particulières en réponse au fait que le niveau de confidentialité d'exécution inclus dans les données de mappage particulières nécessite un niveau de confidentialité d'exécution actuel plus élevé que le niveau de confidentialité du stockage des données actuel établi au cours de l'itération précédente, et
sachant que, après une dernière itération, le niveau de confidentialité du stockage des données actuel et le niveau de confidentialité d'exécution actuel sont égaux ou supérieurs à tous les niveaux de confidentialité du stockage de données et à tous les niveaux de confidentialité d'exécution inclus dans les données de mappage, ou supérieurs aux niveaux de confidentialité du stockage de données et aux niveaux de confidentialité d'exécution inclus dans les données de mappage.

14. Le support de stockage non transitoire lisible par ordinateur d'après les revendications 12 ou 13, sachant que les opérations comprennent le fait de :
configurer un ou plusieurs modules exécutables sur la base des informations de configuration ; et de
transmettre un ou plusieurs modules exécutables à l'environnement d'exécution sur la base des informations de configuration, le ou les modules exécutables étant configurés pour exécuter un ou plusieurs processus pour configurer le ou les modèles d'apprentissage automatique, commander l'évaluation de l'ensemble de données de coopérative par le ou les modèles d'apprentissage automatique, valider le fait que l'ensemble de données coopératif est stocké et/ou supprimé par l'environnement d'exécution, ou des combinaisons de ceux-ci.
